# EUROPEAN PATENT APPLICATION

(11) **EP 4 568 320 A1**
(43) Date of publication of application: **11.06.2025**
(21) Application number: 23849840.6
(22) Date of filing: 11.07.2023
(51) Int. Cl.: H04W 24/02, H04W 24/08, G06F 9/50, H04W 88/18

(54) **INFORMATION PROCESSING DEVICE**

(30) Priority: 05.08.2022 JP 2022125881
(71) Applicant: Sony Group Corporation, Tokyo 108-0075 (JP)
(72) Inventor: TSUDA, Shinichiro, Tokyo 108-0075 (JP)
(74) Representative: Witte, Weller & Partner Patentanwälte mbB
(86) International application number: PCT/JP2023/025518
(87) International publication number: WO 2024/029281

(57) **Abstract**

An information processing device executes an application. The information processing device includes a control unit. The control unit makes a request regarding processing of a learning model used in the application to a device having a network data analysis function of a mobile network via a network exposure function and/or directly.

## Description

### Field

The present disclosure relates to an information processing device.

### Background

The first standard of a fifth generation mobile communication system, so-called 5G, was formulated in 2018 as Rel-15. In addition, a service corresponding to 5G was started in Japan in March 2020. The fifth generation mobile communication system has features of enhanced mobile broadband (eMBB), ultra-reliable and low latency communications (URLLC), and massive machine type communication (mMTC).

Rel-18, which started working from June 2022, is the first release located in Beyond 5G (B5G), and an application of an artificial intelligence (AI) technique to 5G is one of new movements.

### Citation List

### Patent Literature

Patent Literature 1: JP 2022-520279 A

### Summary

### Technical Problem

Real-time transmission of 4K or 8K moving images is expected due to features of ultra-high speed, ultra-reliable and low latency communications, and massive machine type communication of 5G. In addition, a use case using AI/machine learning (ML) such as a voice interaction application is increasing. As a method for processing AI/ML, for example, a method in which a cloud performs processing in addition to a client, or a method in which a client and a cloud perform distributed processing can be considered. In addition to an application, a mechanism for guaranteeing a delay in 5G communication by end to end (E2E) including the AI/ML processing is desired.

Patent Literature 1 described above discloses a technique of holding data collected by a network data analytics function (NWDAF) of a 5G system in a network function repository entity. However, in Patent Literature **1,** the AI/ML processing is not mentioned.

Therefore, the present disclosure provides a mechanism capable of further reducing a delay in 5G communication including the AI/ML processing in end to end (E2E) .

Note that the above problem or object is merely one of a plurality of problems or objects that can be solved or achieved by a plurality of embodiments disclosed in the present specification.

### Solution to Problem

An information processing device of the present disclosure executes an application. The information processing device includes a control unit. The control unit makes a request regarding processing of a learning model used in the application to a device having a network data analysis function of a mobile network via a network exposure function and/or directly.

### Brief Description of Drawings

FIG. 1 is a diagram illustrating an example of a configuration of a neural network (NN) model.
FIG. 2 is a diagram illustrating an example of a configuration of a deep neural network (DNN) model.
FIG. 3 is a diagram illustrating an example of AI/ML processing via a 5G system.
FIG. 4 is a diagram illustrating another example of the AI/ML processing via the 5G system.
FIG. 5 is a diagram illustrating a configuration of a network architecture of the 5G system.
FIG. 6 is a block diagram illustrating a configuration example of an information processing device according to an embodiment of the present disclosure.
FIG. 7 is a diagram illustrating a configuration example of a base station device according to the embodiment of the present disclosure.
FIG. 8 is a block diagram illustrating a configuration example of a wireless communication device according to the embodiment of the present disclosure.
FIG. 9 is a diagram illustrating an example of a connectivity model for edge computing in the 5G system.
FIG. 10 is a diagram illustrating an example of an architecture for an edge application server during non-roaming.
FIG. 11 is a diagram illustrating another example of the architecture for the edge application server during non-roaming.
FIG. 12 is a diagram illustrating an example of a QoS architecture of 5GS.
FIG. 13 is a diagram illustrating an example of a configuration of an architecture for data collection of a network data analysis function.
FIG. 14 is a diagram illustrating an example of a configuration of an architecture for acquiring network analysis information.
FIG. 15 is a diagram illustrating an example of a configuration of an architecture for storing collected data and network analysis information.
FIG. 16 is a diagram illustrating an example of a configuration of an architecture for acquiring an AI/ML model.
FIG. 17 is a diagram illustrating an example of processing in which an AF acquires analysis information from NWDAF.
FIG. 18 is a diagram illustrating an example of processing in which the AF acquires analysis information from NWDAF.
FIG. 19 is a diagram illustrating an example of a configuration of an application utilizing AI/ML according to the embodiment of the present disclosure.
FIG. 20 is a diagram illustrating an example of the configuration of the application utilizing AI/ML according to the embodiment of the present disclosure.
FIG. 21 is a diagram illustrating an example of a method for providing information of a 5G system via NEF and making a request to the 5G system according to the embodiment of the present disclosure.
FIG. 22 is a diagram illustrating an example of the method for providing information of the 5G system via NEF and making a request to the 5G system according to the embodiment of the present disclosure.
FIG. 23 is a sequence diagram illustrating an example of PDU session establishment processing according to the embodiment of the present disclosure.
FIG. 24 is a sequence diagram illustrating another example of the PDU session establishment processing according to the embodiment of the present disclosure.
FIG. 25 is a sequence diagram illustrating another example of the PDU session establishment processing according to the embodiment of the present disclosure.
FIG. 26 is a flowchart illustrating an example of processing when an operation of a learned model of an application according to the embodiment of the present disclosure is distributed by a client and a cloud. Description of Embodiments

Hereinafter, an embodiment of the present disclosure will be described in detail with reference to the attached drawings. Note that, in the present specification and the drawings, components having substantially the same functional configuration are denoted by the same reference sign, and redundant description is omitted.

In addition, in the present specification and the drawings, similar components of the embodiment may be distinguished from each other by attaching different alphabets or numbers after the same reference sign. Note that, in a case where it is not particularly necessary to distinguish similar components from each other, only the same reference sign is attached.

One or more embodiments (including Examples, Modifications, and Application Examples) described below can be each independently performed. On the other hand, at least a part of each of the plurality of embodiments described below may be appropriately combined with at least a part of another embodiment to be performed. The plurality of embodiments can include novel features different from each other. Therefore, the plurality of embodiments can contribute to solving different objects or problems, and can exhibit different effects.

### <<0. Introduction>>

As described above, real-time transmission of 4K or 8K moving images is expected due to features of ultra-high speed, ultra-reliable and low latency communications, and massive machine type communication of 5G. In addition, a use case using AI/ML such as a voice interaction application is increasing. As a method for processing AI/ML, for example, a method in which a cloud performs processing in addition to a client, or a method in which a client and a cloud perform distributed processing can be considered. In addition to an application, a mechanism for guaranteeing a delay in 5G communication by E2E including the AI/ML processing is desired.

Conventionally, a technique for holding data collected by NWDAF of a 5G system in a network function repository entity is known, but a procedure for causing NWDAF of the 5G system to process an AI/ML model processed by an application has not been considered.

In addition, depending on an application, a plurality of PDU sessions is established for one application. A case of providing a data service by E2E via the plurality of PDU sessions is assumed. At this time, a mechanism for securing synchronization among a plurality of PDU sessions is desired.

Therefore, an information processing device according to a proposed technique of the present disclosure executes an application. The information processing device makes a request for executing processing of a learning model used in an application to a device having a network data analysis function (NWDAF) of a mobile network. The information processing device makes a request to the device via a network exposure function and/or directly.

As a result, when the information processing device causes a cloud server to process all or a part of processing of an application including an AI/ML model via wireless communication, the information processing device can cause NWDAF of a 5G system to process the AI/ML model. As a result, the 5G system can guarantee the processing of the AI/ML model including the wireless communication by E2E.

In addition, the information processing device may cause an edge application server to process the processing of the AI/ML model to be processed by the cloud server. As a result, the information processing device can reduce a delay in data communication that occurs in association with the processing of the AI/ML model.

In addition, the information processing device may control distributed processing of the AI/ML model on the basis of processing capability of a wireless communication device. This makes it possible to protect privacy of data handled by the wireless communication device and to reduce a load on a cloud server.

Furthermore, the information processing device may control the distributed processing of the AI/ML model on the basis of wireless communication quality. As a result, even in a dynamically changing wireless communication environment, the 5G system can guarantee the processing of the AI/ML model including wireless communication by E2E.

### <<1. AI/ML model and operation processing thereof>>

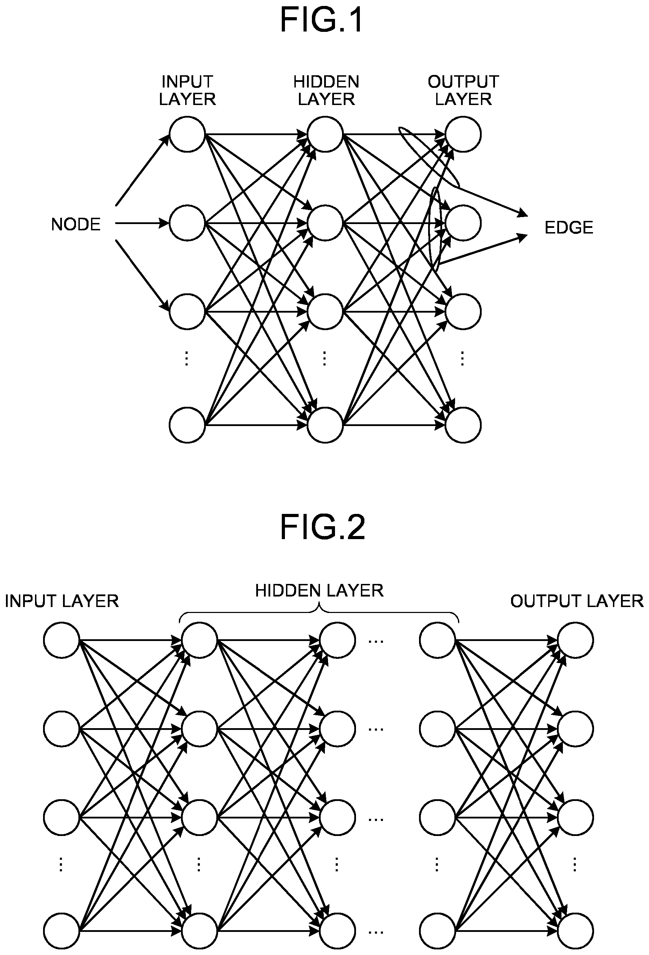

FIG. 1 is a diagram illustrating an example of a configuration of a neural network (NN) model. The neural network is used in machine learning (ML) or the like.

As illustrated in FIG. 1, the neural network includes layers called an input layer, a hidden layer (or an intermediate layer), and an output layer. Each of the layers includes at least one node.

Each node is connected via an edge. Each of the layers has a function called an activation function, and each edge is weighted.

Machine learning is one of artificial intelligence methods that cause a computer to learn and perform recognition, determination, or estimation similar to human. The processing performed by the machine learning includes two types of processing including learning processing and determination processing for recognition, determination, or estimation.

In the learning processing, a device (not illustrated) that performs learning causes a computer to learn a neural network model using learning data and to optimize a weighting factor of each edge. A model extracted as a result of the learning processing is a learned model.

In the determination processing, a device (not illustrated) that performs determination inputs unknown data to the learned model. The learned model outputs a result of recognition, determination, or estimation for unknown data as a result of operation processing.

FIG. 2 is a diagram illustrating an example of a configuration of a deep neural network (DNN) model. The deep neural network is used in deep learning.

The deep neural network model includes a plurality of hidden layers. In machine learning, the number of the hidden layers of the neural network model is limited due to a limit of computing capability of a computer. On the other hand, in deep learning, a DNN model having a larger number of hidden layers is used due to an improvement in computing capability of a computer. By using a learned DNN model that has learned using a huge amount of data, accuracy of recognition, determination, or estimation is improved.

Examples of a general algorithm used in deep learning include
· a convolution neural network (CNN),
· a recurrent neural network (RNN),
· a fully connected neural network,
· a long short-term memory (LSTM), and
· an autoencoder.

In the CNN, a hidden layer includes layers called a convolution layer and a pooling layer. In the convolution layer, filtering by a convolution operation is performed, and data called a feature map is extracted. In the pooling layer, information of the feature map output from the convolution layer is compressed, and down sampling is performed.

The RNN has a network structure in which a value of a hidden layer is recursively input to the hidden layer. In the RNN, for example, time-series data of a short period is processed.

In the fully connected neural network, all intermediate layers are fully connected layers (all nodes between the layers are connected to each other). The fully connected neural network has been applied mainly in a field of voice recognition.

The LSTM can hold an influence of a far past output by introducing a parameter called a memory cell that holds a state of an intermediate layer into an intermediate layer output of the RNN. That is, in the LSTM, time-series data of a longer period than the RNN is processed.

In the autoencoder, a low-dimensional feature capable of reproducing input data by unsupervised learning is extracted. The autoencoder is effective for noise removal, dimension reduction, and the like.

Representative technical areas in which deep learning is utilized include four fields of image recognition, voice recognition, natural language processing, and abnormality detection by a robot. In the image recognition, deep learning is used for applications such as tagging of a person in a social network service (SNS) and automatic driving. In the voice recognition, deep learning is applied to a smart speaker and the like. In the natural language processing, deep learning is applied to search by a browser and automatic translation. In the abnormality detection by a robot, deep learning is used in an airport, a railway, a manufacturing site, and the like.

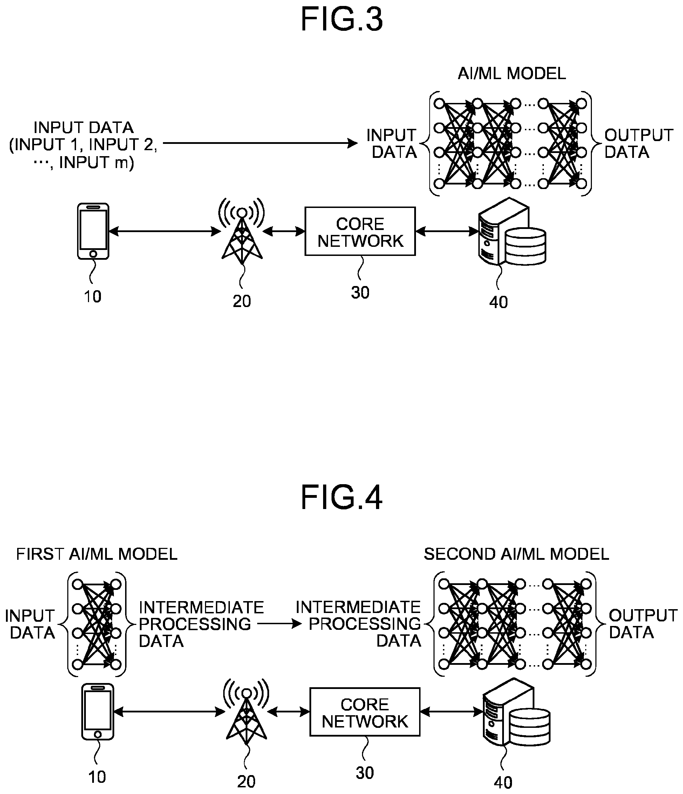

FIG. 3 is a diagram illustrating an example of AI/ML processing via a 5G system. FIG. 3 illustrates a case where an operation of an AI/ML model is processed by a cloud.

As illustrated in FIG. 3, a wireless communication device 10 as a client transmits input data of an AI/ML model to a cloud server 40 (an example of an application server described later) via a base station device 20 and a core network 30 of a 5G system.

The cloud server 40 inputs each piece of the input data received from the wireless communication device 10 to each node of an input layer of the AI/ML model and performs an operation of the AI/ML model. The cloud server 40 returns an operation result, which is an output layer of the AI/ML model, to the wireless communication device 10 via the core network 30 and the base station device 20 of the 5G system.

FIG. 4 is a diagram illustrating another example of the AI/ML processing via the 5G system. FIG. 4 illustrates a case where the operation of the AI/ML model is processed in a distributed manner by a client and a cloud. Here, the AI/ML model is divided into a first AI/ML model and a second AI/ML model.

As illustrated in FIG. 4, the wireless communication device 10, which is a client, inputs each piece of input data to each node of an input layer of the divided first AI/ML model, and performs an operation of the first AI/ML model. The wireless communication device 10 transmits data of each node of an output layer of the first AI/ML model as intermediate processing data to the cloud server 40 via the base station device 20 and the core network 30 of the 5G system.

The cloud server 40 inputs each piece of the intermediate processing data received from the wireless communication device 10 to each node of an input layer of the divided second AI/ML model, and performs an operation of the second AI/ML model. The cloud server 40 returns an operation result, which is an output layer of the second AI/ML model, to the wireless communication device 10 via the core network 30 and the base station device 20 of the 5G system.

### <<2. System configuration example>>

### <2.1. Architecture of 5G system>

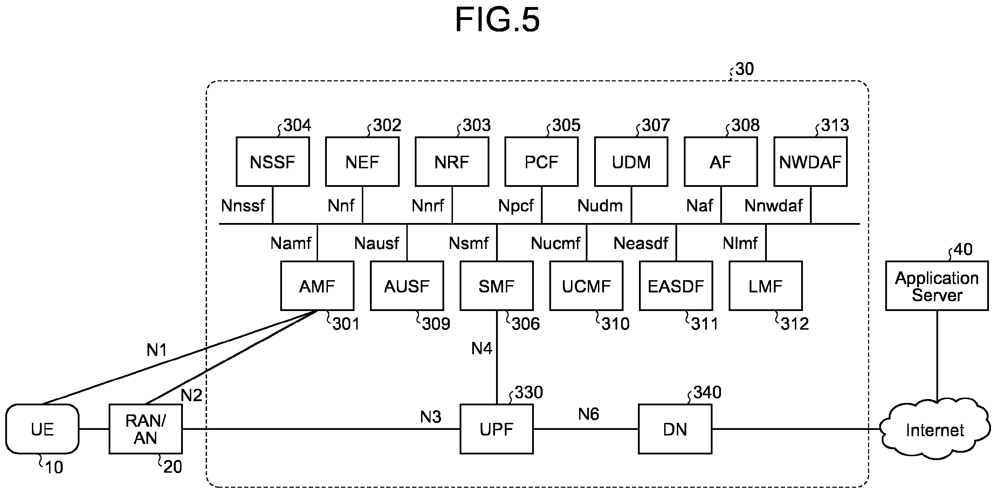

FIG. 5 is a diagram illustrating a configuration of a network architecture of the 5G system. Hereinafter, the 5G system is abbreviated as 5GS (5G system).

As illustrated in FIG. 5, the 5GS includes a user equipment (UE) 10, a (R)AN 20, and a 5G core (5GC) 30. Note that the 5GC 30 is also referred to as an NG core (NGC) or a core network. In addition, the notation of (R)AN represents a base station device including a radio access network (RAN) and an access network (AN). In addition, the UE 10 is the wireless communication device described above.

By an application server (AS) 40 that processes an application being connected to the 5GS via the Internet, the UE 10 can use the application via a 5G service.

When an entity that provides an application, for example, a service provider has a contract such as service level agreement (SLA) with a public land mobile network (PLMN) operator that provides the 5G service, the application server 40 is disposed in the 5GC 30 as a DN 340. Alternatively, the application server 40 and the DN 340 may be connected by a dedicated line or a virtual private network (VPN). Note that the application server 40 is also called a cloud server, and may be provided in a form of an edge server.

A control plane function group of the 5GS includes an access and mobility management function (AMF) 301, a network exposure function (NEF) 302, and a network repository function (NRF) 303. In addition, the control plane function group includes a network slice selection function (NSSF) 304, a policy control function (PCF) 305, a session management function (SMF) 306, and a unified data management (UDM) 307. The control plane function group includes an application function (AF) 308, an authentication server function (AUSF) 309, and a UE radio capability management function (UCMF) 310. The control plane function group includes an edge application server discovery function (EASDF) 311, a location management function (LMF) 312, and an NWDAF 313. As described above, the control plane function group includes a plurality of network functions (NFs).

Here, the AF 308 can operate as an NF that processes a control plane of the application server 40. The AF 308 may be installed in a physically identical device as an entity logically different from the application server 40, that is, in the application server 40. In addition, the AF 308 operates as an NF that processes a control plane for a 5GS application, and can be disposed in the 5GC 30.

The UDM 307 includes a unified data repository (UDR) that holds and manages subscription information, and a front end (FE) unit that processes the subscription information. The AMF 301 performs mobility management. The SMF 306 performs session management.

The UCMF 310 holds UE radio capability information corresponding to all UE radio capability IDs in a PLMN. The UCMF 310 is responsible for assigning each PLMN-assigned UE radio capability ID.

Note that the NSSF 304, the NEF 302, the PCF 305, the EASDF 311, the LMF 312, and the NWDAF 313 will be described later.

Namf is a service-based interface provided by the AMF 301. Nsmf is a service-based interface provided by the SMF 306. Nnef is a service-based interface provided by the NEF 302.

Npcf is a service-based interface provided by the PCF 305. Nudm is a service-based interface provided by the UDM 307. Naf is a service-based interface provided by AF 308. Nnrf is a service-based interface provided by the NRF 303.

Nnssf is a service-based interface provided by the NSSF 304. Nausf is a service-based interface provided by the AUSF 309. Nucmf is a service-based interface provided by the UCMF 310.

Neasdf is a service-based interface provided by the EASDF 311. Nlmf is a service-based interface provided by the LMF 312. Nnwdaf is a service-based interface provided by the NWDAF 313.

By making a request or subscription for a service provided by another network function, each NF can receive a response or a notification from the service. That is, each NF exchanges information with another NF by means of request/response or subscription/notification via each service-based interface.

A user plane function (UPF) 330 has a function of user plane processing. The data network (DN) 340 has a function of enabling connection to a service unique to a mobile network operator (MNO), the Internet, and a third-party service. The UPF 330 functions as a transfer processing unit of user plane data processed by the application server 40. The UPF 330 also functions as a gateway connected to the (R)AN 20.

Here, the 5GS can configure each NF of the 5GC 30 by virtualization or a container and can install each NF in a cloud server. Furthermore, the 5GS can set each NF dynamically and in a re-configurable manner using a software defined network (SDN).

The (R)AN 20 has a function of enabling connection to the RAN and connection to an AN other than the RAN. The (R)AN 20 includes a base station called a gNB or an ng-eNB. The RAN may also be called a next generation (NG)-RAN.

In addition, the function of the (R)AN 20 is divided into a central unit (CU) that processes L2/L3 functions of a packet data convergence protocol (PDCP) sublayer and higher, and a distributed unit (DU) that processes L2/L1 functions of a radio link control (RLC) sublayer and lower. The function of the (R)AN 20 can be located in a distributed manner via an F1 interface.

Furthermore, a function of the DU is divided into a radio unit (RU) that processes a LOW PHY sublayer and a radio unit (radio), and a DU that processes sublayers of RLC, medium access control (MAC), and HIGH PHY. The function of the DU can be located in a distributed manner, for example, via a fronthaul conforming to an evolved common public radio interface (eCPRI).

Here, the 5GS can configure functions of the CU and/or the DU by virtualization or a container and can install the functions in a cloud server. Furthermore, the 5GS can set the functions of the CU and/or the DU dynamically and in a re-configurable manner using the SDN.

The UE 10 and the AMF 301 mutually exchange information via a reference point N1. The (R)AN 20 and the AMF 301 mutually exchange information via a reference point N2. The SMF 306 and the UPF 330 mutually exchange information via a reference point N4.

### <2.2. Configuration example of information processing device>

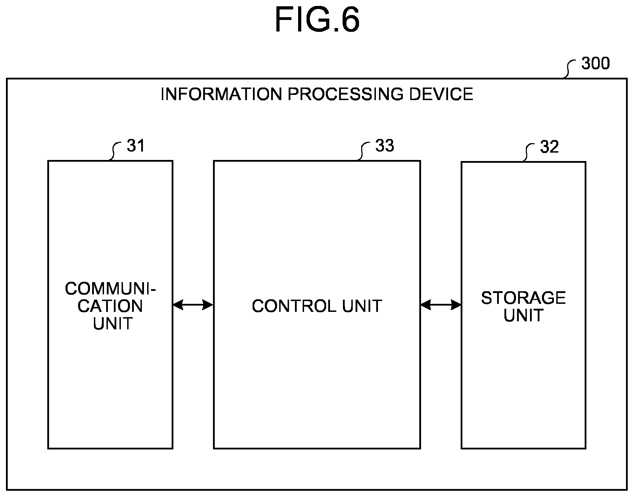

Next, a configuration example of an information processing device 300 according to an embodiment of the present disclosure will be described with reference to FIG. 6. FIG. 6 is a block diagram illustrating a configuration example of the information processing device 300 according to the embodiment of the present disclosure.

The information processing device 300 is a device that implements functions of the NF and the AF 308 of the core network 30 and the application server 40. The information processing device 300 is, for example, a server device. The information processing device 300 may be a device collectively referred to as a cloud server or an edge server.

As illustrated in FIG. 6, the information processing device 300 includes a communication unit 31, a storage unit 32, and a control unit 33. Note that the configuration illustrated in FIG. 6 is a functional configuration, and a hardware configuration may be different from the configuration illustrated in FIG. 6. In addition, functions of the information processing device 300 may be implemented in a distributed manner in a plurality of physically separated configurations. For example, the information processing device 300 may include a plurality of server devices.

The communication unit 31 is a communication interface for communicating with other devices. The communication unit 31 may be a network interface or a device connection interface. For example, the communication unit 31 may be a local area network (LAN) interface such as a network interface card (NIC), or may be a USB interface including a universal serial bus (USB) host controller, a USB port, and the like. In addition, the communication unit 31 may be a wired interface or a wireless interface. The communication unit 31 functions as a communication means of the information processing device 300. The communication unit 31 communicates with the base station device 20, another NF node, or an AN node under control of the control unit 33.

The storage unit 32 is a data readable/writable storage device such as a dynamic random access memory (DRAM), a static random access memory (SRAM), a flash memory, or a hard disk. The storage unit 32 functions as a storage means of the information processing device 300.

The control unit 33 is a controller that controls each unit of the information processing device 300. The control unit 33 is implemented by, for example, a processor such as a central processing unit (CPU), a micro processing unit (MPU), or a graphics processing unit (GPU). For example, the control unit 33 is implemented by a processor executing various programs stored in a storage device inside the information processing device 300 using a random access memory (RAM) or the like as a work area. Note that the control unit 33 may be implemented by an integrated circuit such as an application specific integrated circuit (ASIC) or a field programmable gate array (FPGA). Any of the CPU, the MPU, the GPU, the ASIC, and the FPGA can be regarded as a controller.

### <2.3. Configuration example of base station device>

Next, the base station device 20 will be described. The base station device 20 is a communication device that operates a cell and provides a wireless communication service to one or more wireless communication devices 10 located inside a coverage of the cell. The cell is operated according to any wireless communication system such as LTE or NR. The base station device 20 is connected to a core network. The core network is connected to a packet data network via a gateway device. In addition, the base station device 20 operates a beam identifiable by synchronization signal/PBCH block (SSB), and transmits and receives data to and from one or more wireless communication devices 10 via one or more beams.

Note that the base station device 20 may include an assembly of a plurality of physical or logical devices. For example, the base station device 20 in the embodiment of the present disclosure may be divided into a plurality of devices of a baseband unit (BBU) and an RU, and may be interpreted as an assembly of the plurality of devices. Furthermore or alternatively, the base station device 20 in the embodiment of the present disclosure may be either or both of the BBU and the RU. The BBU and the RU may be connected by a predetermined interface (for example, eCPRI). Furthermore or alternatively, the RU may be referred to as a remote radio unit (RRU) or a radio dot (RD). Furthermore or alternatively, the RU may correspond to gNB-DU described later. Furthermore or alternatively, the BBU may correspond to a gNB-CU described later. Alternatively, the RU may be connected to the gNB-DU described later. Furthermore, the BBU may correspond to a combination of the gNB-CU and the gNB-DU described later. Furthermore or alternatively, the RU may be a device integrally formed with an antenna. An antenna (for example, an antenna integrally formed with the RU) included in the base station device 20 may adopt an advanced antenna system and support MIMO (for example, FD-MIMO) or beamforming. In the advanced antenna system, an antenna (for example, an antenna integrally formed with the RU) included in the base station device 20 may include, for example, 64 transmission antenna ports and 64 reception antenna ports.

In addition, a plurality of the base station devices 20 may be connected to each other. One or more base station devices 20 may be included in a radio access network (RAN). That is, the base station device 20 may be simply referred to as a RAN, a RAN node, an AN, or an AN node. A RAN in LTE is called an enhanced universal terrestrial RAN (EUTRAN). A RAN in NR is called NGRAN. A RAN in W-CDMA (UMTS) is called UTRAN. The base station device 20 of LTE is referred to as an evolved node B (eNodeB) or an eNB. That is, the EUTRAN includes one or more eNodeBs (eNBs). In addition, the base station device 20 of NR is referred to as a gNodeB or a gNB. That is, the NGRAN includes one or more gNBs. Furthermore, the EUTRAN may include a gNB (en-gNB) connected to a core network (EPC) in an LTE communication system (EPS). Similarly, the NGRAN may include an ng-eNB connected to a core network 5GC in a 5G communications system (5GS). Furthermore or alternatively, when the base station device 20 is an eNB, a gNB, or the like, the base station device 20 may be referred to as 3GPP Access. Furthermore or alternatively, when the base station device 20 is a wireless access point (e.g., WiFi (registered trademark) access point), the base station device 20 may be referred to as Non-3GPP Access. Furthermore or alternatively, the base station device 20 may be an optical extension device called a remote radio head (RRH). Furthermore or alternatively, when the base station device 20 is a gNB, the base station device 20 may be referred to as a combination of the above-described gNB central unit (CU) and gNB distributed unit (DU) or either of them. The gNB CU hosts a plurality of upper layers (for example, RRC, SDAP, and PDCP) of Access Stratum for communication with the UE. On the other hand, the gNB-DU hosts a plurality of lower layers (for example, RLC, MAC, and PHY) of Access Stratum. That is, among messages and pieces of information described later, RRC signalling (for example, various SIBs including a MIB and a SIB1, an RRCSetup message, and an RRCReconfiguration message) may be generated by the gNB CU, while DCI and various physical channels (for example, PDCCH and PBCH) described later may be generated by the gNB-DU. Alternatively, in the RRC signalling, for example, some configurations (setting information) such as IE: cellGroupConfig may be generated by the gNB-DU, and the remaining configurations may be generated by the gNB-CU. These configurations (setting information) may be transmitted and received to and from an F1 interface described later. The base station device 20 may be configured to be able to communicate with another base station device 20. For example, when the plurality of base station devices 20 are eNBs or a combination of an eNB and an en-gNB, the base station devices 20 may be connected to each other by an X2 interface. Furthermore or alternatively, when the plurality of base station devices 20 are gNBs or a combination of a gn-eNB and a gNB, the devices may be connected to each other by an Xn interface. Furthermore or alternatively, when the plurality of base station devices 20 is a combination of a gNB CU and a gNB DU, the devices may be connected to each other by the above-described F1 interface. A message/information (RRC signalling or DCI information and physical channel) described later may be communicated (for example, via the X2, Xn, or F1 interface) among the plurality of base station devices 20.

Furthermore, as described above, the base station device 20 may be configured to manage a plurality of cells. A cell provided by the base station device 20 is called a serving cell. The serving cell includes a primary cell (PCell) and a secondary cell (SCell). When a dual connectivity (for example, a EUTRA-EUTRA dual connectivity, a EUTRA-NR dual connectivity (ENDC), a EUTRA-NR dual connectivity with 5GC, an NR-EUTRA dual connectivity (NEDC), or an NR-NR dual connectivity) is provided to a UE (for example, the wireless communication device 10), a PCell and zero or one or more SCell(s) provided by a master node (MN) are called a Master Cell Group. Furthermore, the serving cell may include a primary secondary cell or primary SCG cell (PSCell). That is, when the dual connectivity is provided to the UE, a PSCell and zero or one or more SCell(s) provided by a secondary node (SN) are called a secondary cell group (SCG). Unless a special configuration (for example, PUCCH on SCell) is made, a physical uplink control channel (PUCCH) is transmitted in the PCell and the PSCell, but is not transmitted in the SCell. In addition, a radio link failure is also detected in the PCell and the PSCell, but is not detected in the SCell (does not have to be detected). As described above, the PCell and the PSCell have special roles in the serving cell(s), and therefore are also called a special cell (SpCell). One downlink component carrier and one uplink component carrier may be associated with one cell. In addition, a system bandwidth corresponding to one cell may be divided into a plurality of bandwidth parts. In this case, one or more bandwidth parts (BWPs) may be set for the UE, and one bandwidth part may be used for the UE as an active BWP. In addition, radio resources (for example, a frequency band, a numerology (subcarrier spacing), and a slot configuration) that can be used by the wireless communication device 10 may vary depending on a cell, a component carrier, or a BWP.

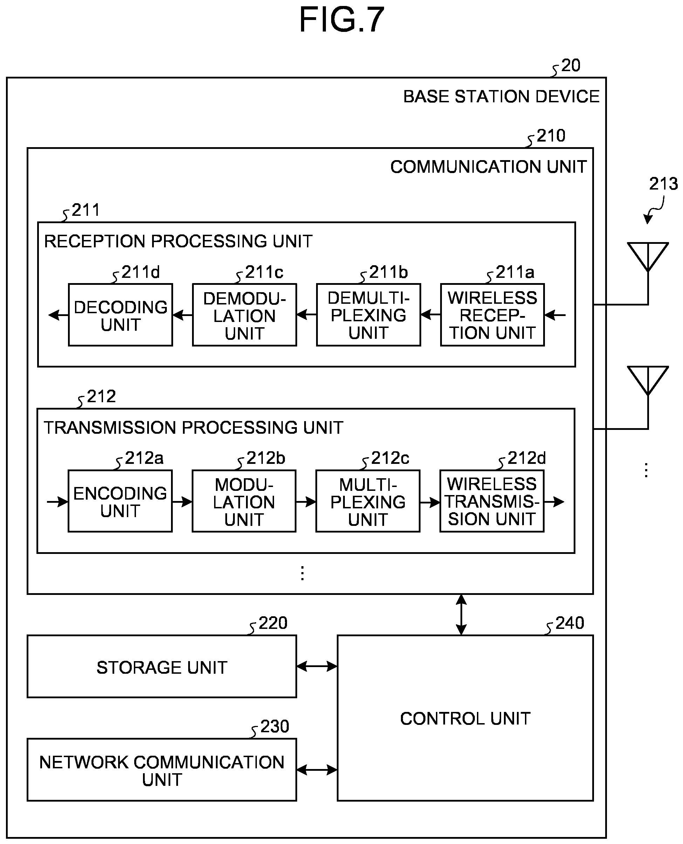

FIG. 7 is a diagram illustrating a configuration example of the base station device 20 according to the embodiment of the present disclosure. The base station device 20 is a communication device (radio system) that wirelessly communicates with the wireless communication device 10. The base station device 20 is a kind of information processing device.

The base station device 20 includes a communication unit 210, a storage unit 220, a network communication unit 230, and a control unit 240. Note that the configuration illustrated in FIG. 7 is a functional configuration, and a hardware configuration may be different from the configuration illustrated in FIG. 7. In addition, functions of the base station device 20 may be implemented in a distributed manner in a plurality of physically separated devices. For example, as described above, the functions of the base station device 20 are distributed to a CU and a DU, or a CU, a DU, and an RU.

The communication unit 210 is a wireless communication interface that wirelessly communicates with other communication devices (for example, the wireless communication device 10 and another base station device 20). The communication unit 210 is a wireless transceiver that operates under control of the control unit 240. The communication unit 210 may be compatible with a plurality of wireless access systems. For example, the communication unit 210 may be compatible with both NR and LTE. The communication unit 210 may be compatible with another cellular communication system such as W-CDMA or cdma2000. In addition, the communication unit 210 may be compatible with a wireless LAN communication system in addition to the cellular communication system. Of course, the communication unit 210 may be compatible with only one wireless access system.

The communication unit 210 includes a reception processing unit 211, a transmission processing unit 212, and an antenna 213. The communication unit 210 may include a plurality of the reception processing units 211, a plurality of the transmission processing units 212, and a plurality of the antennas 213. Note that, when the communication unit 210 is compatible with a plurality of wireless access systems, each unit of the communication unit 210 can be configured individually for each wireless access system. For example, when the base station device 20 is compatible with NR and LTE, the reception processing unit 211 and the transmission processing unit 212 may be individually configured for NR and LTE.

The reception processing unit 211 processes an uplink signal received via the antenna 213. The reception processing unit 211 includes a wireless reception unit 211a, a demultiplexing unit 211b, a demodulation unit 211c, and a decoding unit 211d.

The wireless reception unit 211a performs downconversion, removal of an unnecessary frequency component, control of an amplification level, quadrature demodulation, conversion to a digital signal, removal of a guard interval, extraction of a frequency domain signal by fast Fourier transform, and the like on an uplink signal. For example, it is assumed that the wireless access system of the base station device 20 is a cellular communication system such as LTE. At this time, the demultiplexing unit 211b separates an uplink channel such as a physical uplink shared channel (PUSCH) or a physical uplink control channel (PUCCH) and an uplink reference signal from a signal output from the wireless reception unit 211a. The demodulation unit 211c demodulates a received signal using a modulation system such as binary phase shift keying (BPSK) or quadrature phase shift keying (QPSK) with respect to a modulation symbol of the uplink channel. The modulation system used by the demodulation unit 211c may be multilevel QAM such as 16 quadrature amplitude modulation (16QAM), 64QAM, or 256QAM. The decoding unit 211d performs decoding processing on an encoded bit of the demodulated uplink channel. The decoded uplink data and uplink control information are output to the control unit 240.

The transmission processing unit 212 performs transmission processing on downlink control information and downlink data. The transmission processing unit 212 includes an encoding unit 212a, a modulation unit 212b, a multiplexing unit 212c, and a wireless transmission unit 212d.

The encoding unit 212a encodes downlink control information and downlink data input from the control unit 240 using an encoding system such as block encoding, convolutional encoding, or turbo encoding. Here, the encoding may be performed with a polar code or a low density parity check code (LDPC code). The modulation unit 212b modulates an encoded bit output from the encoding unit 212a by a predetermined modulation system such as BPSK, QPSK, 16QAM, 64QAM, or 256QAM. The multiplexing unit 212c multiplexes a modulation symbol of each channel and a downlink reference signal, and locates the multiplexed result in a predetermined resource element. The wireless transmission unit 212d performs various types of signal processing on a signal from the multiplexing unit 212c. For example, the wireless transmission unit 212d performs processing such as conversion into a time domain by fast Fourier transform, addition of a guard interval, generation of a baseband digital signal, conversion to an analog signal, quadrature modulation, up-conversion, removal of an extra frequency component, and power amplification. A signal generated by the transmission processing unit 212 is transmitted from the antenna 213.

The storage unit 220 is a storage device capable of reading and writing data, such as a DRAM, an SRAM, a flash memory, or a hard disk. The storage unit 220 functions as a storage means of the base station device 20.

The network communication unit 230 is a communication interface for communicating with other devices (for example, another base station device 20). For example, the network communication unit 230 is a LAN interface such as an NIC. The network communication unit 230 may be a USB interface including a USB host controller, a USB port, and the like. In addition, the network communication unit 230 may be a wired interface or a wireless interface. The network communication unit 230 functions as a network communication means of the base station device 20. The network communication unit 230 communicates with other devices under control of the control unit 240.

The control unit 240 is a controller that controls each unit of the base station device 20. The control unit 240 is implemented by, for example, a processor such as a CPU, an MPU, or a GPU. For example, the control unit 240 is implemented by a processor executing various programs stored in a storage device inside the base station device 20 using a RAM or the like as a work area. Note that the control unit 240 may be implemented by an integrated circuit such as an ASIC or an FPGA. Any of the CPU, the MPU, the GPU, the ASIC, and the FPGA can be regarded as a controller.

### <2.4. Configuration example of wireless communication device>

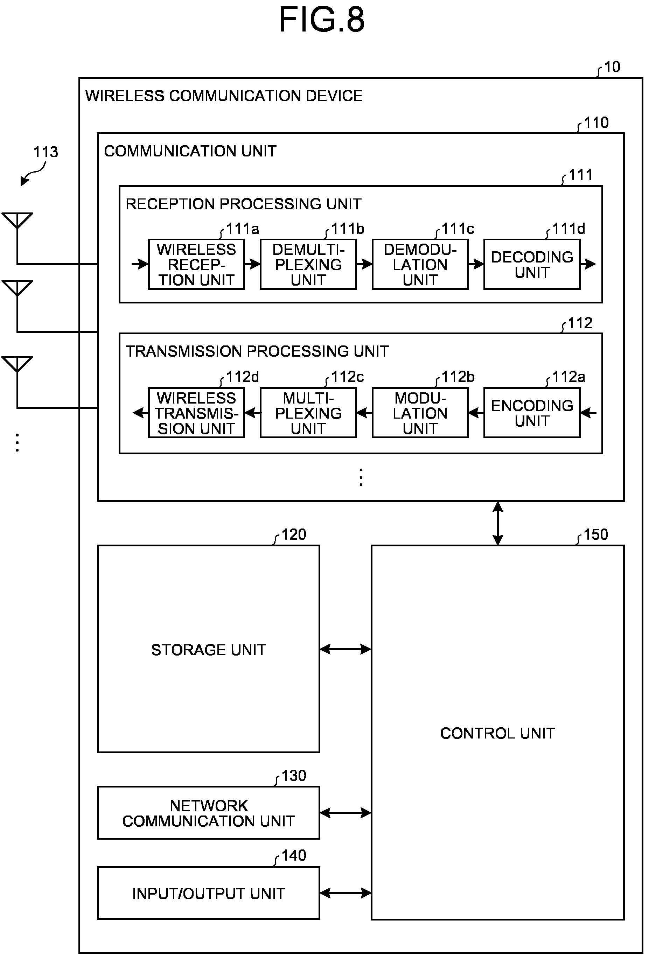

A configuration example of the wireless communication device 10 according to the embodiment of the present disclosure will be described with reference to FIG. 8. FIG. 8 is a block diagram illustrating a configuration example of the wireless communication device 10 according to the embodiment of the present disclosure.

The wireless communication device 10 is a wireless communication device that performs wireless communication with the base station device 20. The wireless communication device 10 is, for example, a mobile phone, a smart device (a smartphone or a tablet), a personal digital assistant (PDA), or a personal computer. The wireless communication device 10 may be a head mounted display, a VR goggle, or the like having a function of wirelessly transmitting and receiving data.

In addition, the wireless communication device 10 may be capable of sidelink communication with another wireless communication device 10. The wireless communication device 10 may be able to use an automatic retransmission technique such as hybrid automatic repeat request (HARQ) when performing sidelink communication. The wireless communication device 10 may be capable of non orthogonal multiple access (NOMA) communication with the base station device 20. Note that the wireless communication device 10 may also be capable of NOMA communication in communication (sidelink) with another wireless communication device 10. In addition, the wireless communication device 10 may be capable of low power wide area (LPWA) communication with other communication devices (for example, the base station device 20 and another wireless communication device 10). In addition, the wireless communication used by the wireless communication device 10 may be wireless communication using millimeter waves. Note that the wireless communication (including sidelink communication) used by the wireless communication device 10 may be wireless communication using radio waves or wireless communication (optical wireless) using infrared rays or visible light.

The wireless communication device 10 may perform communication by being simultaneously connected to a plurality of base station devices or a plurality of cells. For example, when one base station device 20 can provide a plurality of cells, the wireless communication device 10 can execute carrier aggregation by using one cell as a pCell and using another cell as an sCell. In addition, when each of a plurality of the base station devices 20 can provide one or more cells, the wireless communication device 10 can implement dual connectivity (DC) by using one or more cells managed by one base station device (MN (for example, MeNB or MgNB)) as a pCell or a pCell and a sCell(s) and using one or more cells managed by the other base station device 20 (SN (for example, SeNB or SgNB)) as a pCell (PSCell) or a pCell (PSCell) and a sCell(s). The DC may be referred to as a multi connectivity (MC).

Note that, when a communication area is supported via cells of different base station devices 20 (a plurality of cells having different cell identifiers or the same cell identifier), the plurality of cells can be bundled, and the base station devices 20 and the wireless communication device 10 can communicate with each other by a carrier aggregation (CA) technique, a dual connectivity (DC) technique, or a multi-connectivity (MC) technique. Alternatively, via cells of different base station devices 20, the wireless communication device 10 and the plurality of base station devices 20 can communicate with each other by a coordinated multi-point transmission and reception (CoMP) technique.

The wireless communication device 10 includes a communication unit 110, a storage unit 120, a network communication unit 130, an input/output unit 140, and a control unit 150. Note that the configuration illustrated in FIG. 7 is a functional configuration, and a hardware configuration may be different from the configuration illustrated in FIG. 7. In addition, functions of the wireless communication device 10 may be implemented in a distributed manner in a plurality of physically separated configurations.

The communication unit 110 is a signal processing unit for wirelessly communicating with other wireless communication devices (for example, the base station device 20 and another wireless communication device 10). The communication unit 110 operates under control of the control unit 150. The communication unit 110 may be a wireless transceiver corresponding to one or more wireless access systems. For example, the communication unit 110 may be compatible with both NR and LTE. The communication unit 110 may be compatible with W-CDMA and cdma2000 in addition to NR and LTE. In addition, the communication unit 110 may be compatible with communication using NOMA.

The communication unit 110 includes a reception processing unit 111, a transmission processing unit 112, and an antenna 113. The communication unit 110 may include a plurality of the reception processing units 111, a plurality of the transmission processing units 112, and a plurality of the antennas 113. Configurations of the communication unit 110, the reception processing unit 111, the transmission processing unit 112, and the antenna 113 are similar to those of the communication unit 210, the reception processing unit 211, the transmission processing unit 212, and an antenna 214 of the base station device 20.

The storage unit 120 is a storage device capable of reading and writing data, such as a DRAM, an SRAM, a flash memory, or a hard disk. The storage unit 120 functions as a storage means of the wireless communication device 10.

The network communication unit 130 is a communication interface for communicating with other devices connected via a network. For example, the network communication unit 130 is a LAN interface such as an NIC. The network communication unit 130 may be a wired interface or a wireless interface. The network communication unit 130 functions as a network communication means of the wireless communication device 10. The network communication unit 130 communicates with other devices under control of the control unit 150.

The input/output unit 140 is a user interface for exchanging information with a user. For example, the input/output unit 140 is an operation device for a user to perform various operations, such as a keyboard, a mouse, an operation key, or a touch panel. Alternatively, the input/output unit 140 is a display device such as a liquid crystal display or an organic electroluminescence display (organic EL display). The input/output unit 140 may be an acoustic device such as a speaker or a buzzer. In addition, the input/output unit 140 may be a lighting device such as a light emitting diode (LED) lamp. The input/output unit 140 functions as an input/output means (an input means, an output means, an operation means, or a notification means) of the wireless communication device 10.

The control unit 150 is a controller that controls each unit of the wireless communication device 10. The control unit 150 is implemented by, for example, a processor such as a CPU, an MPU, or a GPU. For example, the control unit 150 is implemented by a processor executing various programs stored in a storage device inside the wireless communication device 10 using a RAM or the like as a work area. Note that the control unit 150 may be implemented by an integrated circuit such as an ASIC or an FPGA. Any of the CPU, the MPU, the GPU, the ASIC, and the FPGA can be regarded as a controller.

### <<3. Network slice selection assistance information>>

A network slice is a unit of service obtained by dividing communication service provided by the 5G according to a communication attribute (for example, a data rate, delay, and the like) required for each service.

Single network slice selection assist information (S-NSSAI) is assigned to each network slice as information for assisting selection of a network slice (network slice selection assistance information). The S-NSSAI includes a set of a mandatory slice/service type (SST) including 8 bits for identifying a slice type and an optional slice differentiator (SD) including 24 bits for distinguishing different slices in the same SST.

Network slice setting information includes one or more Configured NSSAI(s). A serving public land mobile network (PLMN) can set Configured NSSAI applied for each PLMN in the UE 10. Alternatively, a Home PLMN (HPLMN) can set Default Configured NSSAI in the UE 10. The UE 10 under the serving PLMN can use Default Configured NSSAI only when Configured NSSAI for the serving PLMN is not set in the UE 10.

Note that the Default Configured NSSAI may be set in the UE 10 in advance. In addition, the UDM 307 of the HPLMN may provide or update the Default Configured NSSAI using UE Parameters Update via UDM Control Plane processing. The Configured NSSAI includes one or more S-NSSAI(s).

Requested NSSAI is NSSAI provided from the UE 10 to the serving PLMN during registration processing. The Requested NSSAI should be one of the following:
· Default Configured NSSAI;
· Configured NSSAI;
· Allowed NSSAI or a part thereof; and
· NSSAI obtained by adding one or more S-NSSAI(s) included in Configured NSSAI to Allowed NSSAI or a part thereof.

The Allowed NSSAI is, for example, NSSAI provided by the serving PLMN to the UE 10 during registration processing. The Allowed NSSAI indicates a value (values) of one or more S-NSSAI(s) available in the current registration area of the current serving PLMN.

Rejected S-NSSAI indicates a value of S-NSSAI whose use is not permitted in at least one tracking area in the current registration area of the current serving PLMN among one or more S-NSSAI(s) included in the Requested NSSAI.

Subscribed S-NSSAI is S-NSSAI that can be used in the PLMN by the UE 10 according to subscription information.

The NSSF 304 determines the Allowed NSSAI and the Configured NSSAI, and determines an AMF set that is a list of candidates for the AMF 301.

### <<4. Exposure to AF and requests from AF>>

A service provider that manages and operates the application server 40 can acquire information from each NF of the 5G system via the NEF 302 within a range of SLA with a PLMN operator. The NEF 302 can securely secure and disclose capability and event of each NF to the service provider.

In addition, the service provider can transmit an application function request (AF request) via the NEF 302 to each NF of the 5G system using the AF 308 which is a control plane function for the application server 40.

The AF request should include traffic description, a target UE identifier(s), and an AF transaction identifier, which are mandatory.

The traffic description is information for identifying traffic. The traffic description includes a set of data network name (DNN) and S-NSSAI, and an application identifier (application ID) or traffic filtering information.

The DNN corresponds to an access point name (APN) used in a 4G or earlier system.

The application ID is information for identifying an application that handles traffic of a user plane. The application ID is used by the UPF 330 in order to identify traffic of an application.

The traffic filtering information is information for classifying traffic. The traffic filtering information is, for example, a 5 Tuple including a source IP, a source port number, a destination IP, a destination port number, and a protocol number.

In addition, the AF request can include information regarding the location of a potential application depending on conditions. Here, the information regarding the location of the potential application is provided as a list including a data network access identifier (DNAI) for identifying user plane access to one or more DNs 340 that are candidates for implementation of an application.

Furthermore, the AF request can optionally include the following information and the like:
· Spatial Validity Condition;
· N6 Traffic Routing requirements;
· Application Relocation Possibility;
· UE IP address preservation indication;
· Temporary Validity Condition;
· Information regarding AF subscription for SMF event;
· Information for IP Replacement of edge application server (EAS) in 5GC 30;
· User Plane Latency Requirement;
· Information regarding AF change; and
· Instruction for edge application server relocation (EAS Relocation).

The Spatial Validity Condition is provided in a form of a valid area. When the AF request is a request regarding determining routing of traffic in the SMF 306, the Spatial Validity Conditionn indicates that the routing is applied only to traffic of the UE 10 located at a specific location. When the AF request is a request for registering a notification of an event of path management of a user plane, the Spatial Validity Condition indicates that the notification is applied only to traffic of the UE 10 located at a specific location.

Information regarding the N6 Traffic Routing requirements is information provided for each DNAI. The information regarding the N6 Traffic Routing requirements can include a routing profile ID and N6 traffic routing information.

Here, N6 is a reference point between the UPF 330 and the DN 340. The routing profile ID is identification information for referring to a policy regarding routing agreed in advance between the AF 308 and the 5GC 30. The N6 traffic routing information includes information necessary for transferring traffic to the DNAI.

The Application Relocation Possibility is information indicating whether or not an application can be relocated after the location of the application is selected by the 5GC 30.

The UE IP address preservation indication indicates that an IP address of the UE 10 related to traffic identified by the Traffic Description should be maintained. When receiving this instruction from the AF 308, the 5GC 30 maintains the IP address of the UE 10 by avoiding reselection of the UPF 330 after the UPF 330 is selected.

The Temporary Validity Condition is provided in a form indicating a time interval or a period in which the AF request is applied. When the AF request is a request regarding determination of routing of traffic in the SMF 306, the Temporary Validity Condition indicates when the routing is applied. When the AF request is a request for registering a notification of an event of path management of a user plane, the Temporary Validity Condition indicates when the notification occurs.

An AF request including information regarding AF subscription to an SMF event is a request to register a notification of a change in a user plane path related to traffic identified by the Traffic Description. The request includes a subscription type, a notification target address for receiving an event notification, and the like.

When the subscription type is early notification, the SMF 306 transmits a notification of a path change before a new user plane path is set. When the subscription type is late notification, the SMF 306 transmits a notification of a path change after a new user plane path is set.

Information for IP replacement of an edge application server gives an instruction on an identifier of a source edge application server and an identifier of a target edge application server for a service by edge computing. The identifiers herein are, for example, IP addresses and port numbers of edge application servers of a source and a target.

The User Plane Latency Requirement is a delay in a user plane that is considered when a target edge application server is relocated. In a network location, the AF 308 can request User Plane Latency Requirement to the 5GC 30 via an AF request such that the SMF 306 can determine relocation of PSA-UPF on the basis of the AF request. The network location herein is a network location in which an estimation value of a delay in a user plane between the UE 10 and a candidate PDU session anchor (PSA)-UPF is known to the SMF 306.

Information regarding the AF change is information regarding relocation of the AF 308. The information regarding the AF change includes an AF ID which is information for identifying a target AF 308 of a change destination. Instruction for relocating the edge application server is an instruction to relocate the application.

### <<5. Location information management function>>

In a UE-Based mode, the UE 10 can acquire assistance data from the LMF 312 and perform measurement and calculation of a location regarding a global navigation satellite system (GNSS). The UE 10 can use, for example, a widely known method called Assisted GNSS.

Note that, for example, when a signal from the GNSS cannot be received, the UE 10 may detect information regarding the location by a means other than the GNSS. For example, the UE 10 can detect information regarding its own location using a method called Sidelink positioning, WLANpositioning, Bluetooth (registered trademark) positioning, or terrestrial beacon systems (TBS) positioning.

In sidelink positioning, the UE 10 measures a sidelink received signal strength indicator (SL RSSI) by sidelink communication with a surrounding UE 10 or a road side unit (RSU). The UE 10 calculates a location on the basis of information regarding the location of each UE 10 or the road side unit and a measured value of the SL RSSI. Furthermore, the UE 10 may measure a round trip time (RTT) with the surrounding UE 10 or the road side unit and calculate the location thereof.

In the WLAN positioning, the UE 10 measures a received signal strength indicator (RSSI) regarding each WLAN access point. The UE 10 calculates a location on the basis of information regarding known coordinates of each WLAN access point and a measured value thereof. Furthermore, the UE 10 may measure an RTT with the WLAN access point and calculate the location.

In the Bluetooth positioning, the UE 10 may measure an RSSI regarding each Bluetooth beacon and calculate a location on the basis of information regarding known coordinates of each Bluetooth beacon and a measured value thereof.

When the UE 10 include a GNSS receiver, the UE 10 performs measurement regarding the GNSS such as Code Phase, Doppler, or Carrier Phase in a UE-Assisted mode. The UE 10 transmits these measured values to the LMF 312, and the LMF 312 calculates the location of the UE 10.

In addition, for the UE 10 that cannot receive a signal from the GNSS even when the UE 10 includes a GNSS receiver or does not include the GNSS, the LMF 312 may acquire information regarding the location of the UE 10 by a positioning technique called
· observed time difference of arrival (OTDOA)
· Multi-RTT
· downlink angle-of-departure (DL AoD)
· downlink time difference of arrival (DL TDOA)
· uplink time difference of arrival (UL TDOA), or
· UL angle of arrival (AoA). Alternatively, the LMF 312 may acquire information regarding the location of the UE 10 by a positioning technique using a cell ID (CID).

For example, in the OTDOA, the UE 10 receives downlink positioning reference signals (PRSs) from a plurality of transmission points (TPs), and reports measured values regarding physical cell ID, a global cell ID, a TP ID, and a PRS timing to the LMF 312 via LTE positioning protocol (LPP). As a result, the LMF 312 calculates the location of the UE 10 on the basis of information regarding known coordinates of the measured TPs and the reported relative timing of the PRS.

In addition, for example, in positioning using the CID, the LMF 312 calculates the location of the UE 10 on the basis of information regarding known coordinates of the ng-eNB or the gNB and the following measurement results reported from the UE 10.

The UE 10 reports, for example, an evolved cell global identifier (ECGI) or a physical cell ID and measurement results regarding reference signal received power (RSRP), reference signal received quality (RSRQ), and UE Rx-Tx time difference to the LMF 312. Here, the UE Rx-Tx time difference is defined as a time difference between a reception timing by the UE 10 and a transmission timing by the UE 10.

### <<6. Edge computing technique>>

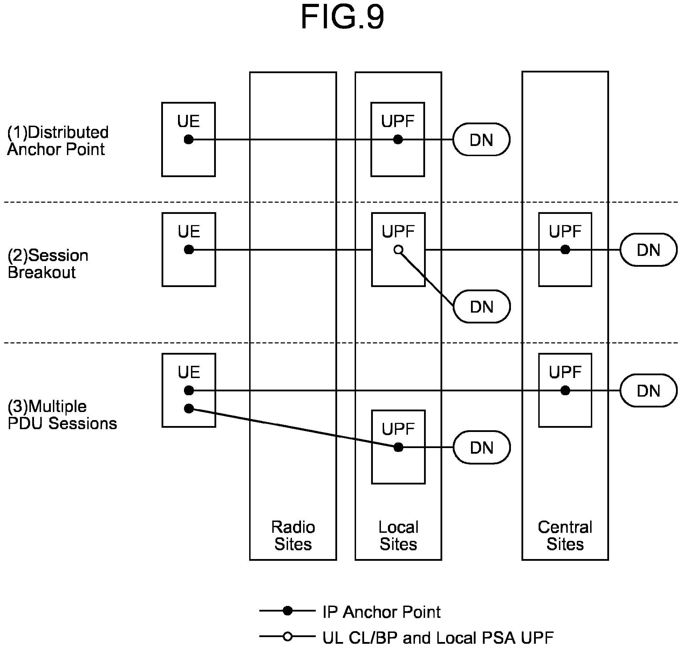

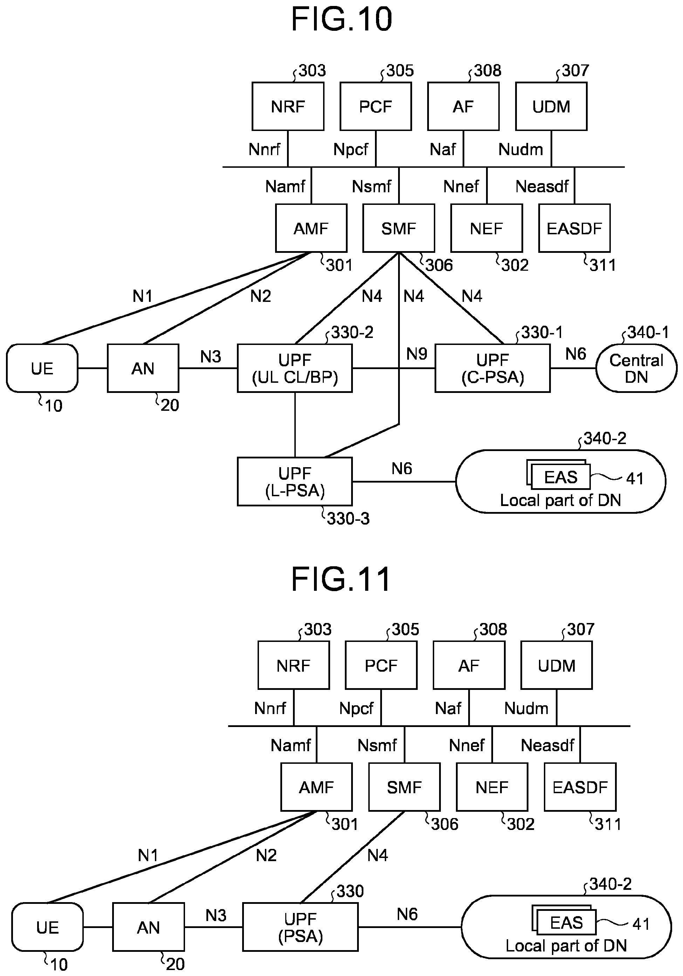

FIG. 9 is a diagram illustrating an example of a connectivity model for edge computing in the 5G system. Note that this drawing and FIGS. 10 and 11 described later are on the basis of the drawings described in the literature "3GPP TS23.548".

In the 5GC 30, at least the following three kinds are defined as a connectivity model for connection with an edge server that processes edge computing:
· distributed anchor point;
· session breakout; and
· multiple PDU sessions.

(1) of FIG. 9 illustrates an example of the "distributed anchor point". The "distributed anchor point" is a connectivity model in which a PSA-UPF is installed at a local site near the UE 10 for one PDU session.
(2) of FIG. 9 illustrates an example of the "session breakout". The "session breakout" is a connectivity model in which, for one PDU session, a PSA UPF (C-PSA UPF) is installed at a central site, and one or more PSA UPFs (L-PSA UPFs) are installed at a local site.
(3) of FIG. 9 illustrates an example of the "multiple PDU sessions". In the "multiple PDU sessions", an edge computing application uses a PDU session connected to a PSA UPF installed at a local site. In addition, anther application uses a PDU session connected to a PSA UPF installed at a central site.

Here, some or all of functions of an application processed by the application server 40 are implemented in the DN 340. For example, in the "distributed anchor point", the "session breakout", or the "multiple PDU sessions", some or all of the functions of the application are implemented in the local site DN 340 that operates as an edge server. That is, the DN 340 installed at the local site operates as an edge application server. Here, some or all of the functions of the application are functions of processing data transmitted and received via a QoS flow that requests low latency.

Similarly, the AF 308 that processes a control plane of the application server 40 is set in a distributed manner according to a function of an application implemented in a distributed manner in the DN 340 at the central site or the DN 340 at the local site.

FIG. 10 is a diagram illustrating an example of an architecture for an edge application server 41 during non-roaming.

This architecture is an architecture for connecting a DN (local part of DN) 340-2 to which the edge application server (EAS) 41 is connected in one PLMN in one PDU session in a form of "session breakout".

The SMF 306 of the PLMN controls the UPF 330 in order to connect the PSA UPF (C-PSA UPF) installed at a central site to the edge application server 41. The UPF supports a PSA UPF (L-PSA UPF 330-3) and an uplink classifier (UL CL)/branching point (BP) 330-2 installed at a local site. The SMF 306 controls the UPF 330 via N4 which is a reference point.

Here, the "session breakout" may be generally called local breakout.

FIG. 11 is a diagram illustrating another example of the architecture for the edge application server 41 during non-roaming.

This architecture is an architecture for connecting the DN (local part of DN) 340-2 to which the edge application server (ESA) 41 is connected in one PLMN in one PDU session in a form of "distributed anchor point".

The SMF 306 of the PLMN controls a PSA UPF installed to be connected to the edge application server 41 via the reference point N4.

The SMF 306 can discover a candidate edge application servers 41 via the EASDF 311.

### <<7. QoS control of 5G system>>

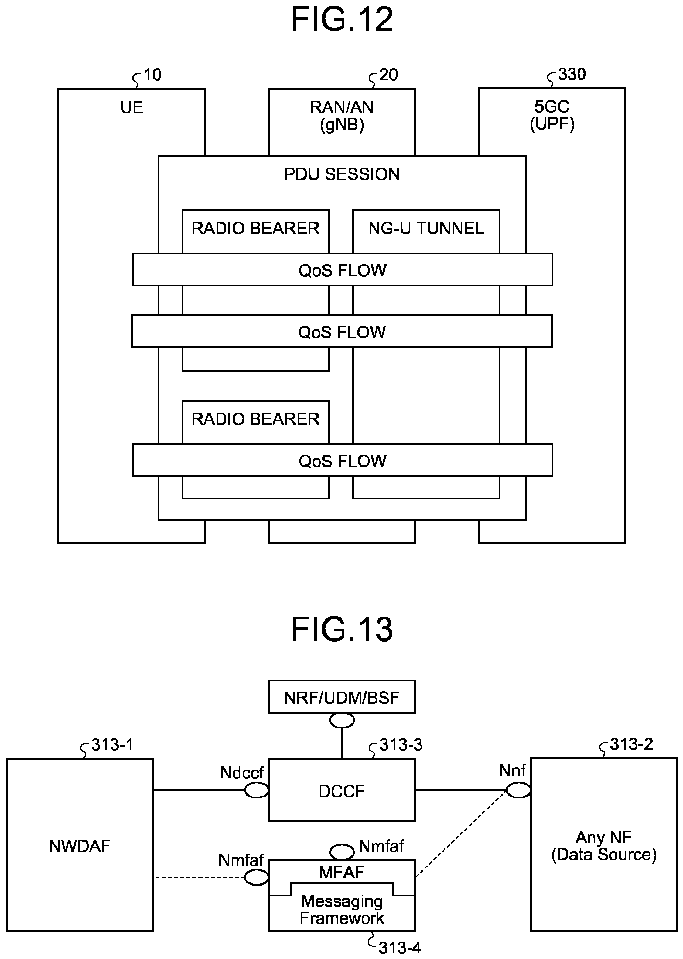

FIG. 12 is a diagram illustrating an example of a QoS architecture of 5GS. This drawing is on the basis of the drawing described in the literature "3GPP TS38.300".

At a non-access stratum (NAS) level, a QoS flow has the finest granularity in distinguishing different QoSs from each other in a protocol data unit (PDU) session. Within the PDU session, the QoS flow is identified by a QoS flow ID (QFI).

In addition, in XR or a media service, a group of packets transmits a payload of a PDU set. The PDU set includes one or more PDUs that transmit a payload of an information unit generated at an application level. Examples of the information unit include an image frame, a video slice of XR or a media service, and an I frame, a P frame, and a B frame of moving image data in a group of picture (GOP) format.

That is, a packet in the PDU set is handled as a unit of data to be received and decoded within a certain period of time. In the QoS flow with the finest granularity in terms of QoS control, data can be identified with finer granularity by the PDU set. The 5GS can apply QoS control at a PDU set level in addition to QoS control at a QoS flow level.

The SMF 306 associates a PCC rule with the QoS flow on the basis of QoS and a service request. The SMF 306 assigns QFI to a new QoS flow, and acquires a PCC rule and other information associated with the QoS flow from the PCF 305. The SMF 306 acquires a QoS profile of the QoS flow, an instruction regarding a corresponding UPF (for example, an N4 rule), and a QoS rule from the PCC rule.

The base station (gNB) of the (R)AN 20 can establish at least one data radio bearer (DRB) with each UE 10 together with the PDU session. The DRB is a logical path for transmitting data. In the QoS model of 5G, a guaranteed flow bit rate (GBR) in which a band is guaranteed and a non-guaranteed flow bit rate (Non-GBR) in which a band is not guaranteed are supported.

The (R)AN 20 and the 5GC 30 guarantee service quality by mapping each packet to an appropriate QoS flow and DRB. That is, two-stage mapping of mapping between an IP flow and a QoS flow in non-access stratum (NAS) and mapping between a QoS flow and a DRB in access stratum (AS) is performed.

At a NAS level, the QoS flow is characterized by a QoS profile provided from the 5GC 30 to the (R)AN 20 and a QoS rule provided from the 5GC 30 to the UE 10.

The QoS profile is used by the (R)AN 20 to determine a processing method on a radio interface. The QoS rule is used to instruct the UE 10 to perform mapping between traffic of a user plane in an uplink and the QoS flow. Therefore, for a multicast multicast/broadcast service (MBS) session, a QoS rule of an MBS QoS flow and a QoS parameter at a QoS flow level are not provided to the UE 10.

The QoS profile is provided from the SMF 306 via the AMF 301 and the reference point N2 to the (R)AN 20 or is set in advance in the (R)AN 20.

In addition, the SMF 306 can provide one or more QoS rules and, if necessary, a QoS parameter at a QoS flow level related to the QoS rule to the UE 10 via the AMF 301 and the reference point N1.

In addition to or instead of this, reflective QoS control can be applied to the UE 10. The reflective QoS control is QoS control that monitors a QFI of a downlink packet and applies the same mapping to an uplink packet.

The QoS flow becomes a GBR QoS flow or a non-GBR QoS flow depending on a QoS profile. The QoS profile of the QoS flow includes, for example, QoS parameters such as a 5G QoS Identifier (5QI) and an allocation and retention priority (ARP).

The ARP includes information regarding a priority level, pre-emption capability, and pre-emption vulnerability.

The priority defines a relative importance of the QoS flow, and indicates that the smallest value of the priority level is prioritized the most. The pre-emption capability is an indication that defines whether or not a certain QoS flow can deprive a resource already assigned to another lower priority QoS flow.

The pre-emption vulnerability is an index that defines whether or not a certain QoS flow can vacate a resource assigned thereto to another higher priority QoS flow. Either "enabled" or "disabled" is set for the pre-emption capability and the pre-emption vulnerability.

In the GBR QoS flow, the QoS profile includes:
· uplink and downlink guaranteed flow bit rate (GFBR);
· uplink and downlink maximum flow bit rate (MFBR);
· uplink and downlink maximum packet loss rate;
· delay critical resource type;
· notification control;
and the like.

In the non-GBR QoS flow, the QoS profile includes a reflective QoS attribute (RQA), additional QoS flow information, and the like.

The notification control of the QoS parameter indicates whether or not notification from the (R)AN 20 is requested when a certain QoS flow cannot satisfy a GFBR. For a certain GBR QoS flow, when the notification control is "enabled" and it is determined that the GFBR cannot be satisfied, the (R)AN 20 transmits a notification indicating this to the SMF 306.

At this time, unless the (R)AN 20 is in a special state of requesting release of a RAN resources of the GBR QoS flow, the (R)AN 20 should maintain the QoS flow. Examples of the special state include radio link failure and RAN internal congestion.

When it is determined that the GFBR is satisfied again for the QoS flow, the (R)AN 20 transmits a new notification indicating this to the SMF 306.

An aggregate maximum bit rate (AMBR) is related to a session-AMBR of each PDU session and a UE-AMBR of each UE 10. The session-AMBR restricts an aggregate bit rate expected to be provided across all non-GBR QoS flows for a specific PDU session and is managed by the UPF 330. The UE-AMBR restricts an aggregate bit rate expected to be provided across all non-GBR QoS flows for a certain UE 10 and is managed by the (R)AN 20.

The 5QI relates to QoS features and provides a policy for setting a node-specific parameter to each QoS flow. Standardized or preset QoS features of 5G can be found from the 5QI, and no explicit signaling is performed. Signaled QoS features can be included as part of the QoS profile.

The QoS features include information regarding a resource type, a priority, a packet delay budget, a packet error rate, an averaging window, a maximum data burst volume, and the like. The resource type is a GBR QoS flow or a non-GBR QoS flow. The packet delay budget may include a packet delay budget in the 5GC 30.

At an AS level, the DRB defines a packet processing method at a wireless interface (Uu interface). The DRB provides the same packet transfer processing to any packet.

The (R)AN 20 maps the QoS flow to the DRB on the basis of a QFI and a QoS profile set in the QFI. The (R)AN 20 can establish different DRBs for packets requesting different types of packet transfer processing (see FIG. 12).

In addition, the (R)AN 20 can also multiplex a plurality of QoS flows belonging to the same PDU session into the same DRB (see FIG. 12).

In an uplink, mapping of a QoS flow to a DRB is controlled by a mapping rule signaled by two different methods.

One method is a method called reflective mapping. In the reflective mapping, the UE 10 monitors a QFI of a downlink packet for each DRB and applies the same mapping to an uplink packet.

The other method is a method called explicit configuration. In the explicit configuration, the mapping rule of the QoS flow to the DRB is explicitly signaled by an RRC.

In a downlink, a QFI is signaled on the Uu interface by the (R)AN 20 for a reflective quality of service (RQoS). However, neither the (R)AN 20 nor the NAS signals a QFI for a certain DRB on the Uu interface unless the (R)AN 20 and the NAS use the reactive mapping for the QoS flow carried in the DRB.

In an uplink, the (R)AN 20 can set to signal a QFI toward the UE 10 on the Uu interface. In addition, the (R)AN 20 can set a default DRB for each PDU session. When an uplink packet adapts to neither the explicit configuration nor the reactive mapping, the UE 10 maps the packet to the default DRB of the PDU session.

For the non-GBR QoS flow, the 5GC 30 may transmit an additional QoS flow information parameter related to any QoS flow to the (R)AN 20. This is performed in order to give an instruction for increasing a frequency of certain traffic relative to another non-GBR QoS flow in the same PDU session.

How to map a plurality of QoS flows in a PDU session to one DRB depends on the (R)AN 20. For example, the (R)AN 20 may map a GBR QoS flow and a non-GBR QoS flow to the same DRB or to different DRBs. In addition, the (R)AN 20 may map a plurality of GBR QoS flows to the same DRB or to different DRBs.

In the 5G NR, a service data adaptation protocol (SDAP) sublayer is newly introduced for QoS control via a QoS flow. By the SDAP sublayer, traffic of a QoS flow is mapped to an appropriate DRB. The SDAP sublayer can have a plurality of SDAP entities. The SDAP sublayer has an SDAP entity for each PDU session on the Uu interface. The SDAP entity is established or released by the RRC.

The QoS flow is identified by a QFI in a PDU session container included in a GPRS tunneling protocol (GTP)-U header. The PDU session is identified by a GTP-U tunnel endpoint ID (TEID). The SDAP sublayer maps each QoS flow to a specific DRB.

When receiving a QoS monitoring request from the AF 308, the PCF 305 can generate an authorized QoS monitoring policy and provide the QoS monitoring policy to the SMF 306 by adding the QoS monitoring policy to the PCC rule.

The SMF 306 can activate end-to-end uplink (UL) /downlink (DL) packet delay measurement between the UE 10 and the PSA-UPF 330 for a QoS flow during a PDU session establishment procedure or a PDU session modification procedure.

The SMF 306 transmits a QoS monitoring request to the UPF 330 via the reference point N4, and transmits N2 signaling in order to request QoS monitoring between the UPF 330 and the (R)AN 20.

The QoS monitoring request includes a monitoring variable determined by the SMF 306 on the basis of the QoS monitoring policy received from the PCF 305 or the authorized QoS monitoring policy locally set in advance.

The (R)AN 20 measures a delay of a UL/DL packet in the (R)AN 20 portion and provides the measured value to the UPF 330 via a reference point N3.

The UPF 330 calculates a delay of the UL/DL packet at the reference point N3 or N9. The UPF 330 transmits the QoS monitoring result to the SMF 306 on the basis of a predetermined condition. Here, the predetermined condition is, for example, only once, periodically, or an event trigger.

In addition, the UPF 330 can support transmission of the QoS monitoring result to the AF 308 via the locally located NEF 302. Here, the QoS monitoring result is, for example, a measurement result of a bit rate (for example, an average bit rate or a maximum bit rate) of each GBR QoS flow of a target PDU session, a measurement result of an aggregate bit rate of all non-GBR QoS flows of a target PDU session, a measurement result of a packet error rate of a target PDU session, a measurement result of an aggregate bit rate of all non-GBR QoS flows of a target UE 10, a measurement result of a packet error rate of a target UE 10, a measurement result of a delay of a UL/DL packet, or the like. The delay of the UL/DL packet is a delay including the delay of the UL/DL packet in the (R)AN 20 portion acquired from the (R)AN 20 and a delay of the UL/DL packet at the reference point N3 or N9.

The SMF 306 may be set so as to transmit DN Performance Analytics of the NWDAF 313 described later to the AF 308 in addition to or instead of QoS monitoring on the basis of the QoS monitoring policy.

The locally located NEF 302 can transmit the QoS monitoring result and/or the DN Performance Analytics to the locally deployed AF 308 with low latency. The locally located AF 308 can register subscription for transmission of the low latency QoS monitoring result and/or the DN Performance Analytics in the PCF 305 via the non-local NEF 302 or the locally located NEF 302.

When the non-local NEF 302 determines that the non-local NEF 302 itself is not suitable for responding to a request from the locally located AF 308, the non-local NEF 302 may redirect the request from the locally located AF 308 to the locally located NEF 302.

The locally located AF 308 may directly register subscription of Npcf_PolicyAuthorization_Subscribe service in the PCF 305, directly receive the QoS monitoring result from the UPF 330, and/or directly receive the DN Performance Analytics from the NWDAF 313.

In addition, the locally located PSA-UPF may provide Nupf_EventExposure_Notify service. The locally located PSA-UPF may transmit Nupf_EventExposure_Notify to a notification target address designated by a session reporting rule received from the SMF 306.

For example, the locally located PSA-UPF registers transmission of the QoS monitoring result as the Nupf_EventExposure_Notify service, and designates the non-local AF 308 or the locally located NEF 302 as the notification target address. When the locally located NEF 302 is designated as the notification target address, the locally located NEF 302 transmits the QoS monitoring result to the non-local AF 308.

In addition, when the PDU session is a session via a time-sensitive networking (TSN) bridge, a packet delay budget for a time sensitive communications (TSC) QoS flow is a sum of a 5G-access network (AN) packet delay budget (PDB) and a core network (CN) PDB. The above-described QoS monitoring mechanism can also be applied to the TSC QoS flow for measurement of a bit rate (for example, an average bit rate or a maximum bit rate) between the UE 10 and the PSA-UPF 330 and end-to-end UL/DL packet delay measurement.

### <<8. Network data analysis function>>

In the 5G system, the NWDAF 313 (see FIG. 5) that processes network analysis information (for example, statistical information) is prepared for network automation.

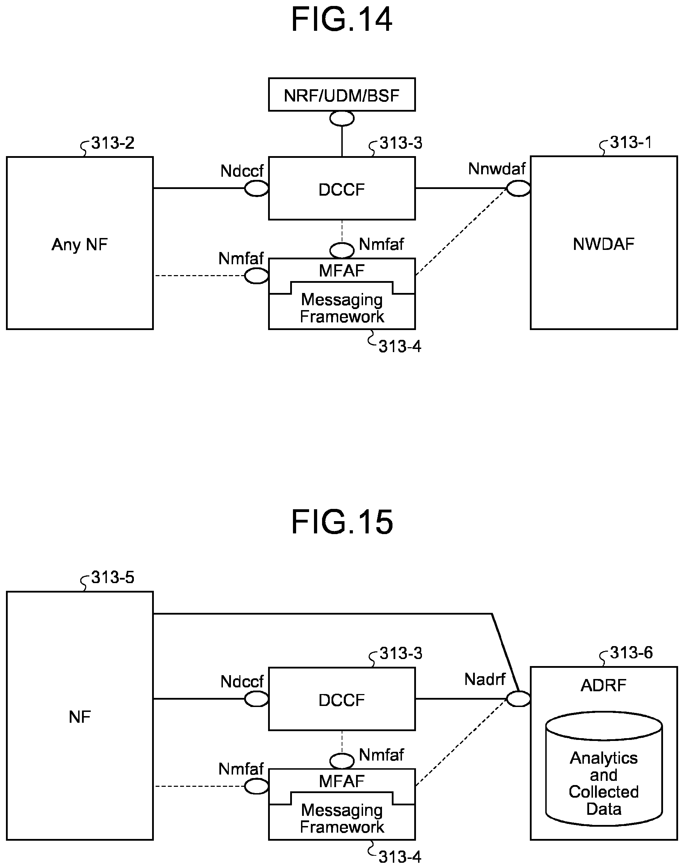

FIG. 13 is a diagram illustrating an example of a configuration of an architecture for data collection of a network data analysis function. This drawing and FIGS. 14 to 18 described later are on the basis of the drawings described in the literature "3GPP TS23.288".

An NWDAF 313-1 illustrated in FIG. 13 can collect data via an Nnf interface using each NF 313-2 of the 5G system as a data source. Here, each NF 313-2 is each NF of the 5GC 30 illustrated in FIG. 5. In addition, the NWDAF 313-1 may collect data via a data collection coordination function (DCCF) 313-3. Note that data that the NWDAF 313-1 can collect from another NF 313-2 may be hereinafter described as parameter of the 5G system.

An Ndccf interface is an interface that is prepared for the NWDAF 313-1 to request the DCCF 313-3 to deliver data. The DCCF 313-3 collects data from each NF 313-2 via the Nnf interface and delivers the data to the NWDAF 313-1 via the Ndccf interface. Alternatively, the DCCF 313-3 may deliver the collected data to the NWDAF 313-1 via Nmfas interface data using a mechanism for collecting data from an NF supported by a messaging framework 313-4.

Each NF 313-2 in the 5G system can acquire network analysis information (for example, statistical information) from the NWDAF 313-1 via the Nnwdaf interface. In addition, each NF 313-2 of the 5G system may acquire network analysis information via the DCCF 313-3.

FIG. 14 is a diagram illustrating an example of a configuration of an architecture for acquiring network analysis information.

The DCCF 313-3 collects network analysis information from the NWDAF 313-1 via the Ndccf interface and delivers the network analysis information to each NF 313-2 of the 5G system via the Nnwdaf interface. Alternatively, the DCCF 313-3 may deliver the acquired network analysis information to each NF 313-2 of the 5G system via the Nmfas interface. In this case, a mechanism for acquiring network analysis information from the NWDAF 313-1 supported by the messaging framework 313-4 is used.

The NF, for example, the NWDAF 313-1, can store network analysis information (for example, statistical information) in an analytics data repository function (ADRF) 313-6 via an Nadrf interface.

FIG. 15 is a diagram illustrating an example of a configuration of an architecture for storing collected data and network analysis information.

The DCCF 313-3 obtains the analysis information of the network from the NWDAF 313-1 via the Ndccf interface and stores the same in the ADRF 313-6 via the Nadrf interface. In addition, the DCCF 313-3 stores the data collected from each NF 313-5 in the ADRF 313-6 via the Nadrf interface. Alternatively, the DCCF 313-3 may request the messaging framework 313-4 to store the acquired data and network analysis information in the ADRF 313-6 via the Nadrf interface.

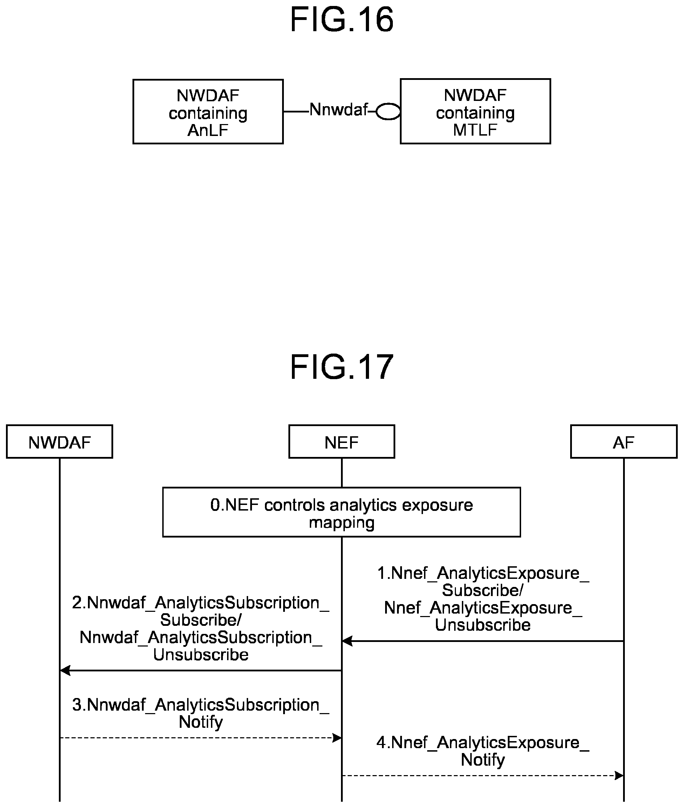

FIG. 16 is a diagram illustrating an example of a configuration of an architecture for acquiring an AI/ML model.

An analytics logical function (AnLF) is a logical function of the NWDAF 313 that executes inference using an AI/ML model, acquires analysis information, and discloses the analysis information. The analysis information is, for example, statistical information of a past event or prediction information.

A model training logical function (MTLF) is a logical function of the NWDAF 313 that learns an AI/ML model and discloses a learning service thereof.

The NWDAF 313 can include either or both of the AnLF and the MTLF.

The NWDAF 313 including the AnLF can acquire a learned AI/ML model from another NWDAF 313 including the MTLF via the Nnwdaf interface and use the learned AI/ML model. Here, the Nnwdaf interface is an interface used by the AnLF to request or subscribe a learned model providing service of the MTLF.

FIG. 17 is a diagram illustrating an example of processing in which the AF 308 acquires analysis information from the NWDAF 313. FIG. 17 illustrates a procedure of subscribing or unsubscribing analysis information of the NWDAF 313 via the NEF 302.

The NEF 302 controls analytics exposure mapping in the AF 308 by an allowed analytics ID (step 0). For example, the NEF 302 restricts subscription of the analytics ID to a certain AF 308, or restricts notification of the analytics ID to a certain AF 308.

The AF 308 activates an Nnef_AnalyticsExposure_Subscribe or Nnef_AnalyticsExposure_Unsubscribe service via the NEF 302, and registers or cancels delivery of analysis information (step 1). If the delivery of the analysis information is permitted to the NEF 302, the NEF 302 executes the following processing.

By activating the Nnef_AnalyticsExposure_Subscribe or Nnef_AnalyticsExposure_Unsubscribe service on the basis of a request from the AF 308, the NEF 302 registers or cancels the delivery of the analysis information (step 2).

If the NEF 302 has registered the delivery of the analysis information, the NWDAF 313 activates the analysis information or the Nnwdaf_AnalyticsSubscription_Notify service and notifies the NEF 302 of a termination request (step 3).

When receiving the notification from the NWDAF 313, the NEF 302 activates the analysis information or the Nnef_AnalyticsExposure_Notify service and notifies the AF 308 of the termination request. The NEF 302 may restrict the notification to the AF 308 by analytics exposure mapping.

The AF 308 confirms whether the termination request is included in the Nnef_AnalyticsExposure_Notify message. If the termination request is included, the AF 308 activates an Nnwdaf_AnalyticsSubscription_Unsubscribe service and cancels the delivery of the analysis information (step 4).

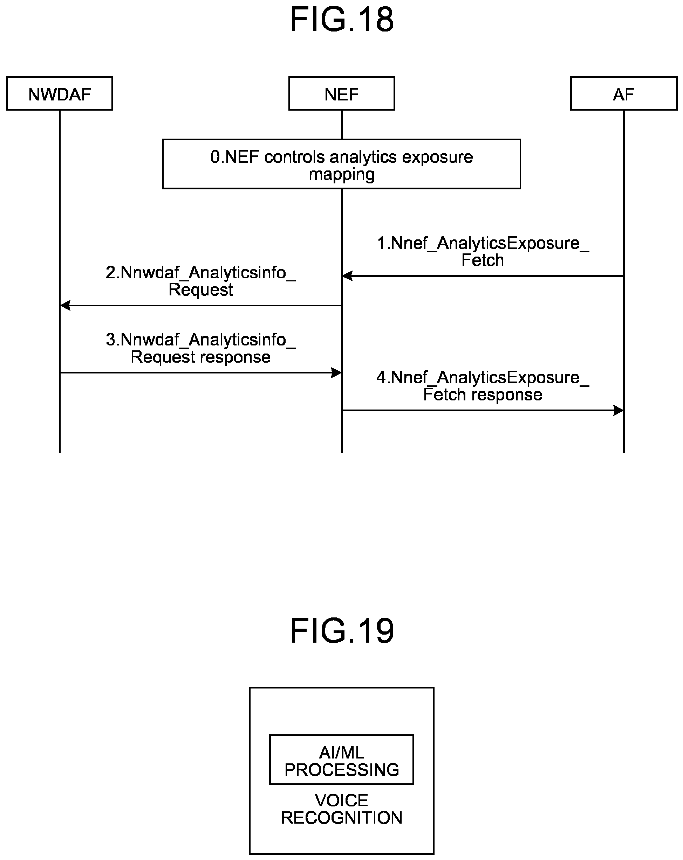

FIG. 18 is a diagram illustrating an example of processing in which the AF 308 acquires analysis information from the NWDAF 313. FIG. 18 illustrates a procedure for requesting analysis information of the NWDAF 313/sending the analysis information of the NWDAF 313 as a response via the NEF 302.

The NEF 302 controls analytics exposure mapping in the AF 308 by an allowed analytics ID (step 0). For example, the NEF 302 restricts an analytics ID requested by a certain AF 308, or restricts a response of the analytics ID to a certain AF 308.

The AF 308 activates an Nnef_AnalyticsExposure_Fetch service via the NEF 302 and requests reception of analysis information (step 1). If the request for the analysis information is permitted to the NEF 302, the NEF 302 executes the following processing.

By activating an Nnwdaf_AnalyticsInfo_Request service on the basis of the request from the AF 308, the NEF 302 requests analysis information from the NWDAF 313 (step 2).

The NWDAF 313 sends the analysis information as a response to the NEF 302 (step 3).

The NEF 302 sends the analysis information as a response to the AF 308. The NEF 302 may restrict the response to the AF 308 by setting a PLMN operator. The AF 308 confirms whether a termination request is included in an Nnef_AnalyticsExposure_Fetch response message, and stops the request for the analysis information if the termination request is included (step 4).

As described above, the NWDAF 313 outputs, for example, the following analysis information in response to a request from another NF.
· Slice load level related network data analytics
· Observed Service Experience related network data analytics
· NF load analytics
· Network Performance Analytics
· UE related analytics
· User Data Congestion Analytics
· QoS Sustainability Analytics
· Dispersion Analytics
· WLAN performance analytics
· Session Management Congestion Control Experience Analytics
· Redundant Transmission Experience related analytics
· DN Performance Analytics

As the slice load level related network data analytics, the NWDAF 313 provides statistical information and prediction information regarding load information of a network slice, and statistical information and prediction information regarding load information of a network slice instance.

The NWDAF 313 provides the following service experiences as observed service experience related network data analytics:
· Service experience of network slice;
· Service experience of application;
· Service experience of edge application of user plane; and
· Service experience of application for each piece of radio access technology (RAT) or each frequency

The NWDAF 313 provides statistical information and prediction information regarding a load of each NF of the 5G system as NF load analytics.

The NWDAF 313 provides, as network performance analytics, statistical information and prediction information regarding network performance such as a status of the gNB, resource use of the gNB, the number of UEs 10, communication performance, or mobility performance.

The NWDAF 313 provides, as UE related analytics, mobility analysis information of the UE 10, communication analysis information of the UE 10, network data analysis information regarding an expected operation parameter of the UE 10, and network data analysis information regarding abnormal operation.

The NWDAF 313 provides, as user data congestion analytics, statistical information and prediction information regarding congestion of user data transmitted on a user plane and statistical information and prediction information regarding congestion of user data transmitted on a control plane.

The NWDAF 313 provides, as QoS sustainability analytics, statistical information and prediction information regarding QoS sustainability.

The NWDAF 313 provides, as dispersion analytics, a data amount for each region, for each slice, for each slice for a specific UE 10 or group, or statistical information and prediction information of transaction distribution.

The NWDAF 313 provides, as WLAN performance analytics, statistical information and prediction information regarding performance of WLAN.

The NWDAF 313 provides, as session management congestion control experience analytics, statistical information of session management congestion control experience (SMCCE).

The NWDAF 313 provides, as redundant transmission experience related analytics, statistical information and prediction information regarding an experience of redundant transmission.

The NWDAF 313 provides, as DN Performance Analytics, statistical information regarding performance of a DN service such as an average traffic rate, a maximum traffic rate, an average packet delay amount, a maximum packet delay amount, or an average packet loss rate.

### <<9. Processing by network function>>

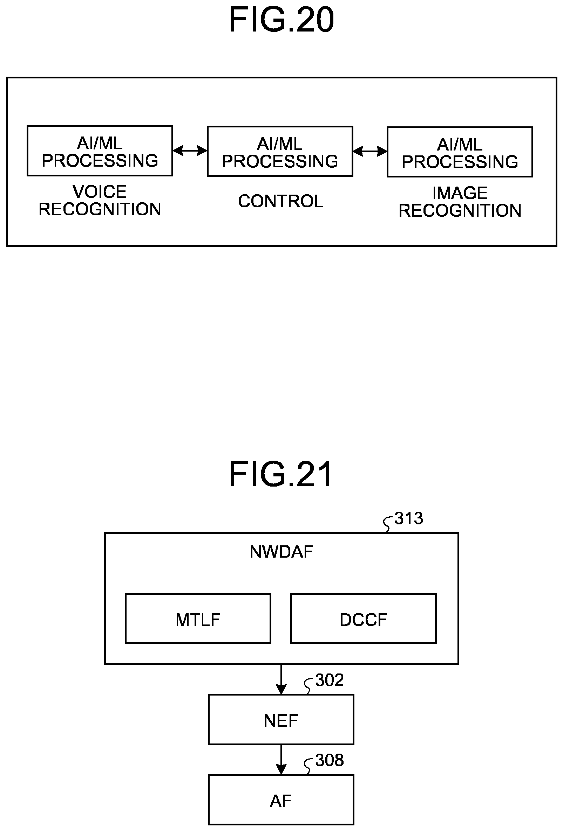

FIGS. 19 and 20 are diagrams illustrating an example of a configuration of an application utilizing AI/ML according to the embodiment of the present disclosure. In FIG. 19, one piece of AI/ML processing (here, for example, voice recognition) is executed by an application. In FIG. 20, a plurality of (here, for example, three) pieces of AI/ML processing are executed by an application.

In the example of FIG. 19, the AI/ML processing itself of voice recognition is an application (for example, a voice interaction application). Furthermore, in the future, as illustrated in FIG. 20, it is considered that an application including a plurality of pieces of AI/ML processing, such as an application that performs control by AI/ML processing using voice recognition, image recognition, and results of the voice recognition and the image recognition, will increase.

In addition, as illustrated in FIGS. 3 and 4, when AI/ML of an application is processed by a cloud server or processed in a distributed manner by a client and a cloud server, a delay amount due to wireless communication occurs. When a cloud server installed outside the 5G system is used, it is difficult to control a delay due to wireless communication, and it is a problem to satisfy quality of experience (QoE) of an application by E2E. Note that the plurality of pieces of AI/ML processing is performed in a dependent manner or in parallel.

As described above, the NWDAF 313 performs processing of learning and inference/estimation of an AI/ML model for acquiring statistical information and prediction information regarding performance of an NF of the 5G system.

Therefore, in the present embodiment, by performing the AI/ML processing of the application, the NWDAF 313 of the 5G system can control the delay due to the wireless communication.

Here, network functions necessary for the NWDAF 313 of the 5G system to perform the AI/ML processing of an application originally processed by a cloud server installed outside the 5G system, processing with these network functions, and the like will be described.

FIG. 21 is a diagram illustrating an example of a method for providing information of the 5G system via the NEF 302 and making a request to the 5G system according to the embodiment of the present disclosure. In FIG. 21, the AF 308 acquires 5G system information from the NWDAF 313 via the NEF 302.

The NWDAF 313 exposes, to the AF 308, information regarding an AI/ML model supported by the NWDAF 313 itself, including the type of the AI/ML model, the kind of algorithm, a setting parameter, and the like.

Here, the type of the AI/ML model is, for example, a neural network model or a deep neural network model. The kind of algorithm is, for example, a convolution neural network, a recurrent neural network, or an LSTM.

In addition, the kind of the AI/ML model may be defined by the type of the AI/ML model and the kind of algorithm. The setting parameter is, for example, a range of the number of layers that can be set in the neural network model or the deep neural network model, a range of the number of nodes of each layer, or a parameter of the 5G system that can be set as input data of an input layer.

Here, the parameter of the 5G system that can be set as the input data of the input layer is a parameter (an example of a first parameter) of the 5G system acquired from an NF of a control plane of the 5GC 30. Furthermore, the parameter of the 5G system that can be set as the input data of the input layer is a parameter (an example of a second parameter) of the 5G system acquired from the UPF 330 that is a network function that processes a user plane of the 5GC 30.

### (First case)

As a first case, the AF 308 acquires information (an example of model information) regarding an AI/ML model from the NWDAF 313 via the NEF 302. After setting a format of the AI/ML model, the AF 308 can instruct the application server 40 to learn the AI/ML model together with the set format.

Here, the format of the AI/ML model is setting of the type of the AI/ML model, the kind of algorithm, the number of layers, or the number of nodes in each layer. In addition, if necessary, information (an example of parameter information) regarding a parameter of the 5G system input to the input layer is included in the setting of the format.

When a parameter of the 5G system is necessary for input of the AI/ML model, the application server 40 may acquire the necessary parameter of the 5G system via the NEF 302 and the AF 308 and generate a learning data set.

When the application server 40 completes learning of the AI/ML model, the AF 308 creates setting information necessary for a format of the learned AI/ML model (hereinafter, also referred to as a learned model).

Here, the setting information includes, for example, the type of the learned model, the kind of algorithm, the number of layers, the number of nodes in each layer, a weighting factor between nodes, and if necessary, setting regarding a correspondence between a parameter of the 5G system input to an input layer and a corresponding node of the input layer.

Note that, when using a plurality of AI/ML models in an application, the application server 40 sets the plurality of AI/ML models and executes learning of each of the models.

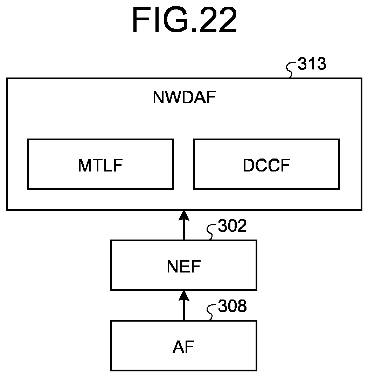

FIG. 22 is a diagram illustrating an example of a method for providing information of the 5G system via the NEF 302 and making a request to the 5G system according to the embodiment of the present disclosure. In FIG. 22, the AF 308 transmits an AF request to the NWDAF 313 via the NEF 302.

The AF 308 transmits, to the NWDAF 313, an AF request including setting information (an example of the second format information) necessary for the format of the learned model (an example of the second format) and an instruction to set the learned model in the NWDAF 313.

When permitting the setting of the requested learned model, the NWDAF 313 assigns an Analytics ID (an example of model identification information) to the learned model, and returns a message including the Analytics ID assigned to the learned model to the AF308 as a response to the AF request.

When requesting setting of a plurality of learned models, the AF 308 transmits, to the NWDAF 313, an AF request including a plurality of pieces of setting information necessary for a format of the plurality of learned models and an instruction to set the plurality of learned models in the NWDAF 313.

The NWDAF 313 stores information regarding the learned AI/ML model to which an analytics ID is assigned in an ADRF 313-4 (see FIGS. 13, 14, and the like).

### (Second case)

Furthermore, as a second case, it is assumed that the application server 40 detects deterioration in accuracy of the learned model in the application. In this case, the application server 40 may activate processing of relearning the AI/ML model on the basis of the format set by the AF 308 in the first case.

The application server 40 may detect deterioration in accuracy of the learned model in the application by deterioration in QoE detected by the UE 10. Here, the application server 40 may acquire the QoE detected by the UE 10 from the UE 10 via an application layer. Alternatively, the application server 40 may acquire the QoE detected by the UE 10 as a parameter of the 5G system via the NEF 302. In the 5G system, the (R)AN 20 acquires the QoE from the UE 10, and a measurement collection entity (MCE), a trace collection entity (TCE), or the AMF 301 of the 5GC 30 collects the QoE from the (R)AN 20. Here, the QoE is collected for each application ID.

The 5GC 30 including operations, administration and maintenance (OAM) activates measurement of the QoE in the UE 10 on a signaling base via the AMF 301, for example.

The (R)AN 20 transmits, to the UE 10, a radio resource control (RRC) message including AppLayerMeasConfig, which is setting related to measurement and a report of the QoE. The (R)AN 20 receives a report including a measurement result of the QoE via an uplink RRC message. The (R)AN 20 transmits a QoE reference ID corresponding to the received report including the measurement result of the QoE to an MCE/TCE.

The activation of the measurement of the QoE may be performed according to use of a specific network slice or an application (for example, an application using a learned model). Then, when the use of the specific network slice or the application is ended, the measurement of the QoE is ended (deactivated).

Alternatively, the UE 10 that has received the setting related to measurement and a report of the QoE from the 5GC 30 in advance may determine activation of the measurement of the QoE according to start of the specific network slice or the application. Then, when the use of the specific network slice or the application is ended, the UE 10 determines an end (deactivation) of the measurement of the QoE.

In addition, the (R)AN 20 can release setting of one or more application layers set in the UE 10 (for example, measurement of the QoE) at any time using one RRCReconfiguration message.

Here, an example has been described in which the 5GC 30 including OAM detects deterioration in accuracy of a learned model in an application via the QoE, but the method for detecting the deterioration is not limited to this example. The 5GC 30 including OAM may set measurement and a report of another application layer in the UE 10 and detect deterioration in accuracy of a learned model on the basis of a measurement result of the application layer. An example of measurement of another application layer will be described later.

When the application server 40 completes relearning of the AI/ML model, the AF 308 creates, on the basis of a relearned AI/ML model (hereinafter, also referred to as a relearned model), setting information necessary for a format of the relearned model.

The AF 308 transmits, to the NWDAF 313, an AF request (an example of a second request) including setting information (an example of format information) necessary for a format of a relearned model corresponding to an Analytics ID to be updated and an instruction to update a learned model to the NWDAF 313.

When permitting the requested update of the learned model, the NWDAF 313 returns a message including an analytics ID assigned to the updated learned model to the AF 308 as a response to the AF request.

### (Third case)

In addition, as a third case, the AF 308 acquires information regarding the AI/ML model from the NWDAF 313 via the NEF 302 according to FIG. 21, and sets a format of the AI/ML model. Thereafter, the AF 308 can instruct the NWDAF 313 to learn the AI/ML model together with the set format according to FIG. 22.

Here, the format of the AI/ML model is setting of the type of the AI/ML model, the kind of algorithm, the number of layers, or the number of nodes in each layer. In addition, if necessary, setting regarding a correspondence between a parameter of the 5G system input to an input layer and a corresponding node of the input layer is included in the setting of the format. When a parameter of the 5G system is necessary for input of the AI/ML model, the MTLF of the NWDAF 313 acquires a necessary parameter of the 5G system from each NF and executes learning of the set AI/ML model.

Here, when using a plurality of AI/ML models in an application, the application server 40 instructs the NWDAF 313 to learn the plurality of AI/ML models together with the plurality of set formats.

When completing learning of the set AI/ML model, the MTLF of the NWDAF 313 assigns an analytics ID to the learned model. The NWDAF 313 transmits a notification including the analytics ID assigned to the learned model according to FIG. 21 to the AF 308 in order to provide notification that learning of the AI/ML model set via the NEF 302 is completed.

When an instruction of learning of a plurality of AI/ML models is given, the NWDAF 313 transmits, to the AF 308, a notification including a plurality of analytics IDs assigned to the plurality of learned models, respectively. Alternatively, the NWDAF 313 may transmit, to the AF 308, a plurality of notifications including an analytics ID assigned to the learned model in order of completion of learning.

### (Fourth case)

Furthermore, as a fourth case, the MTLF of the NWDAF 313 notifies the AF 308 that learning of the AI/ML model set according to FIG. 21 is completed. Thereafter, the MTLF of the NWDAF 313 may store information regarding the learned model in the ADRF 313-4 and execute relearning of the set AI/ML model.

When completing relearning of the set AI/ML model, the MTLF of the NWDAF 313 updates the information regarding the learned model corresponding to the analytics ID stored in the ADRF 313-4 with the information regarding the relearned AI/ML model. The MTLF of the NWDAF 313 transmits, to the AF 308, a notification including the analytics ID assigned to the learned model according to FIG. 21 in order to notify that relearning of the set AI/ML model is completed.

In addition, it is assumed that the application server 40 detects deterioration in accuracy of the learned model in the application. In this case, the AF 308 may designate an Analytics ID according to FIG. 22 and transmit, to the NWDAF 313, a request including an instruction of relearning of the AI/ML model corresponding to the analytics ID.

In addition, the application server 40 may detect deterioration in accuracy of the learned model in the application by deterioration in QoE detected by the UE 10.

### (Fifth case)

In addition, as a fifth case, the AF 308 requests setting necessary for performing QoS control via an AF request in a session established in order to transmit and receive data input to and output from a learned model used in an application. Examples of this session include a PDU session.

In the present case, an example in which an analytics ID is assigned in order to identify a learned model has been described, but a method for identifying the learned model is not limited to this example. For example, the NWDAF 313 assigns an AI/ML model ID to the learned model. The 5G system may identify the learned model using the AI/ML model ID instead of or in addition to the analytics ID.

Although an example in which the AF 308 provides necessary information to the NWDAF 313 using the AF request has been illustrated here, the AF request can be used to provide the necessary information for various network functions of the 5GC 30 via the NEF 302 or directly.

### <<10. Session management method in first case>>

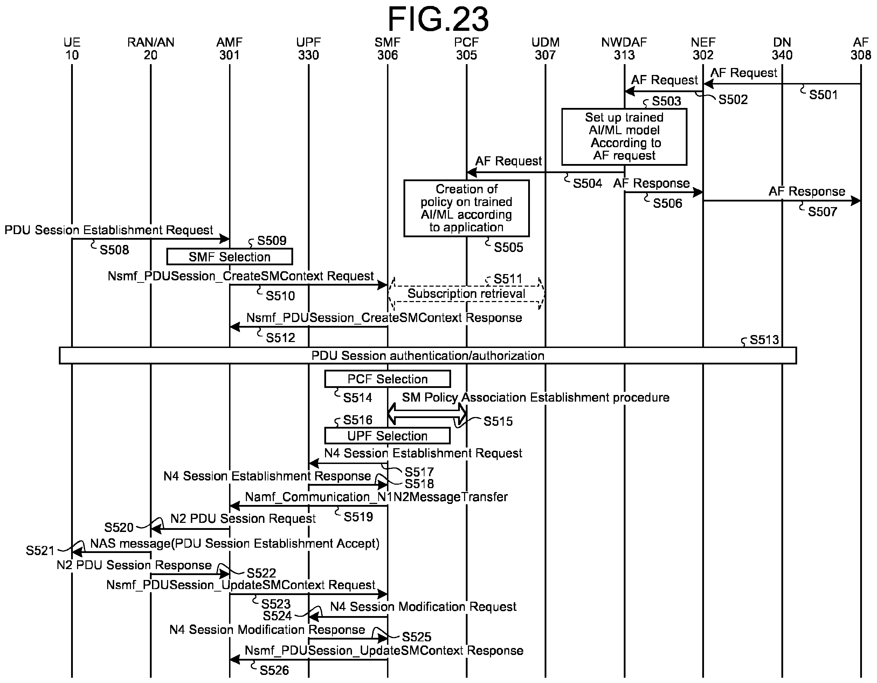

FIG. 23 is a sequence diagram illustrating an example of PDU session establishment processing according to the embodiment of the present disclosure.

The AF 308 transmits, to the NEF 302, an AF request for setting a learned model used by an application according to the first case described in chapter 9 (Step S501). The NEF 302 transfers the AF request to the NWDAF 313 (Step S502). In this manner, the AF 308 transmits the AF request for setting a learned model used by an application to the NWDAF 313 via the NEF 302.

Here, an example of transmitting one AF request is described, but a plurality of AF requests including different requests, respectively may be transmitted. Examples of the different requests include the following AF requests:
· an AF request for setting an AI/ML model before learning or a learned model according to a requested format;
· an AF request for providing notification of an instruction to learn a set AI/ML model before learning; and
· AF request for providing notification of an instruction to update a learned model.

The AF request includes an application ID for identifying an application.

When data that is input to or output from the learned model processed by the NWDAF 313 is routed from the UPF 330 or to the UPF 330 via the DN 340, the AF request includes information regarding N6 traffic routing requirements.

The information regarding the N6 traffic routing requirements includes N6 traffic routing information. The N6 traffic routing information includes information necessary for transferring traffic to a DNAI specified by the application ID.

When the DNAI corresponds to user plane access of a plurality of QoS flows to the DN 340, a connection destination to which each QoS flow is transferred, for example, a port number may be included in the N6 traffic routing information.

The NWDAF 313 sets a learned AI/ML model used by an application according to the AF request acquired from the AF 308 (Step S503). Here, setting of the learned AI/ML model is, for example, the type of the AI/ML model, the kind of algorithm, the number of layers, the number of nodes in each layer, a weighting factor between nodes, or the like.

Note that, when a parameter of the 5G system is input to an input layer of the learned AI/ML model, the setting of the learned AI/ML model includes setting regarding a correspondence between a corresponding node of the input layer and the parameter of the 5G system (an example of correspondence information). The correspondence information can include first correspondence information in which a parameter and a format of the 5G system acquired from an NF of a control plane of the 5GC 30 are associated with each other. In addition, the correspondence information can include second correspondence information in which a parameter and a format of the 5G system acquired from the UPF 330 that is a network function of processing a user plane of the 5GC 30 are associated with each other.

When setting the learned AI/ML model, the NWDAF 313 assigns identification information such that the learned AI/ML model can be identified in the 5G system. The identification information is, for example, an analytics ID or an AI/ML model ID.

In addition, when data acquired from a network function (for example, the UPF 330) that processes a user plane is input to an input layer of the learned AI/ML model, the AF request includes setting regarding a correspondence between a corresponding node of the input layer and a QoS parameter (for example, QoS features, 5QI, or the like). Here, when there is a plurality of corresponding nodes of the input layer and different QoS parameters are applied to the plurality of nodes, respectively, a plurality of QoS parameters can be set.

Furthermore, when data output from an output layer of the learned AI/ML model is processed by a network function that processes a user plane, the AF request includes setting regarding a correspondence between a corresponding node of the output layer and a QoS parameter. Here, when there is a plurality of corresponding nodes of the output layer and different QoS parameters are applied to the plurality of nodes, respectively, a plurality of QoS parameters can be set.

Among the AF requests transmitted from the AF 308, the NWDAF 313 transmits, to the PCF 305, an AF request including a request regarding an application of a QoS parameter to the input/output layer of the learned AI/ML model (Step S504).

The PCF 305 creates a policy/rule regarding a QoS parameter to be applied to the input/output layer of the learned AI/ML model according to the received AF request (Step S505).

When completing the setting of the learned AI/ML model, the NWDAF 313 returns, to the NEF 302, a response to the AF request (Step S506). The NEF 302 transfers, to the AF 308, the response to the AF request (Step S507). In this manner, the NWDAF 313 returns, to the AF 308, the response to the AF request via the NEF 302.

This response includes an analytics ID or an AI/ML model ID for identifying the learned AI/ML model. When a plurality of learned AI/ML models is set for an application, the response includes a plurality of analytics IDs or AI/ML model IDs.

The procedure from Step S501 to Step S507 described above is a procedure corresponding to the processing of the first case described in chapter 9.

The UE 10 transmits a PDU session establishment request, which is a NAS message, to the AMF 301 via the (R)AN 20 (Step S508).

Here, the 5G system can notify the UE 10 using S-NSSAI that the NWDAF 313 can process a learned AI/ML model used in an application activated by the UE 10 in a registration area.

For example, it is assumed that specific S-NSSAI corresponding to a network slice in which the NWDAF 313 processes the learned AI/ML model used in the application activated by the UE 10 is included in Allowed NSSAI. In this case, the UE 10 can transmit a PDU session establishment request including this specific S-NSSAI to the AMF 301.

As illustrated in FIG. 23, the AMF 301 selects the SMF 306 on the basis of a UE requested DNN and S-NSSAI included in a received message (Step S509). Here, when the UE requested DNN is not included in the received message, the AMF 301 selects a DNN for S-NSSAI, and selects the SMF 306 on the basis of the selected DNN and S-NSSAI.

Here, the 5G system can specify any one of the DNN, the S-NSSAI, and the application ID, or an NWDAF that processes an application and/or a learning model used in a PDU session established by a set thereof.

The AMF 301 transmits, to the selected SMF 306, a session management context generation request (Nsmf_PDUSession_CreateSMContext Request) message for the PDU session (Step S510).

The session management context generation request message includes a subscription permanent identifier (SUPI), the S-NSSAI, and the UE requested DNN or the selected DNN.

The SMF 306 that has received the session management context generation request message acquires session management subscription data from an UDM 407 using a Nudm_SDM_Get message (Step S511). This is performed when session management subscription data corresponding to the SUPI, the S-NSSAI, and the DNN is unavailable.

In addition, the SMF 306 registers the session management subscription information in the UDM 307 using the Nudm_SDM_Subscribe message such that a notification is given at the time of updating the session management subscription data.

When the SMF 306 can process the session management context generation request message received in the above Step S510, the SMF 306 generates a session management context (SM context). The SMF 306 returns a session management context generation response (Nsmf_PDUSession_CreateSMContext Response) message including a session management context ID (SM context ID) to the AMF 301 (Step S512).

When it is necessary to execute second authentication and authorization processing by a DN-AAA server during the PDU session establishment processing, the SMF 306 activates PDU session authentication/authorization (Step S513).

When dynamic policy and charging control (PCC) is applied to a PDU session to be established, the SMF 306 executes PCF selection (Step S514). Alternatively, the SMF 306 may apply a local policy.

In addition, the SMF 306 establishes a session management policy association (SM policy association) with the PCF 305. The SMF 306 may execute session management policy association establishment procedure (SM policy association establishment procedure) with the PCF 305 in order to acquire a default PCC rule for a PDU session (Step S515).

As a result, the SMF 306 can acquire the PCC rule before selecting the UPF 330.

For example, the PCC rule includes a policy/rule related to a learned AI/ML model used by an application corresponding to the application ID.

Examples of the policy/rule related to the learned AI/ML model include the following policy/rules:
· a policy/rule for specifying an NWDAF 313 that processes a learned AI/ML model used by an application;
· a policy/rule regarding an analytics ID or an AI/ML model ID for identifying the learned AI/ML model;
· a policy/rule regarding a correspondence between a corresponding node of an input layer of the learned AI/ML model and a parameter of the 5G system;
· a policy/rule regarding routing between a corresponding node of an input/output layer of the learned AI/ML model and the UPF 330; and
· a policy/rule regarding a QoS parameter to be applied to an input/output layer of the learned AI/ML model.

The SMF 306 specifies that the application uses one or more learned AI/ML models set in the NWDAF 313 on the basis of the PCC rule acquired in the above Step S515. The SMF 306 further executes UPF selection according to a preset rule or the acquired PCC rule, and selects one or more UPFs 330 (Step S516).

The SMF 306 transmits an N4 session establishment request message to the selected UPF 330 (Step S517).

Through this N4 session establishment request message, an N4 rule for controlling uplink and downlink traffic in the UPF 330 is set.

For example, the N4 rule includes information regarding a packet detection rule (PDR), a forwarding action rule (FAR), a QoS enforcement rule (QER), a usage reporting rule (URR), and a buffering action rule (BAR). Furthermore, QoS monitoring may be set through the N4 session establishment request message.

The PDR includes information necessary for classifying packets in the UPF 430. For example, the information necessary for classifying packets is set according to a policy/rule regarding a QoS parameter applied to an input/output layer of the learned AI/ML model. The UPF 330 can classify packets of the PDU session by QFI corresponding to the 5QI.

The FAR includes information regarding a method for processing a specific packet, for example, forward, duplication, drop, or buffer. The QER includes information regarding an instruction of QoS applied to traffic. For example, the information regarding the instruction of QoS applied to traffic is set according to a policy/rule regarding a 5QI (QoS features) of each QoS flow acquired from the PCF 305. The URR includes information necessary for measuring and reporting traffic. The BAR includes a period and an amount of data to be buffered, and information regarding a notification method in a control plane.

Furthermore, the N4 rule may include, for example, information regarding routing of data that is input to and output from the learned AI/ML model processed by the NWDAF 313 in the UPF 330. This is performed, for example, according to a policy/rule regarding routing between a corresponding node of an input/output layer of the learned AI/ML model and the UPF 330 (for example, a policy/rule regarding N6 traffic routing requirements).

When receiving the N4 session establishment request message, the UPF 330 returns an N4 session establishment response message to the SMF 306 (Step S518).

Note that, when a plurality of UPFs 330 is selected for the PDU session in the above Step S516, the N4 session establishment processing is activated for each UPF 330.

The SMF 306 transmits a Namf_Communication_N1N2MessageTransfer message to the AMF 301 (Step S519).

The Namf_Communication_N1N2MessageTransfer message includes a PDU session ID, N2 session management information (N2 SM information), CN tunnel information (CN tunnel info), S-NSSAI, and an N1 session management container (N1 SM container).

The N2 session management information includes a PDU session ID, QFI (s), a QoS profile, and the like. Here, the QoS profile may include information regarding a PDU set. For example, information regarding a PDU set that is set for a QoS flow corresponding to a specific QFI may be included.

In addition, when a plurality of QoS flows is assigned to one PDU session, a QoS profile set including a plurality of QoS profiles may be provided. For example, when a plurality of learned AI/ML models is processed in one PDU session, a QoS flow is set for each learned AI/ML model. Alternatively, when a plurality of learned AI/ML models is processed in one PDU session, for example, data input to and output from one learned AI/ML model is classified into a plurality of QoS flows.

In addition, data input to and output from the learned AI/ML model and other user plane data may be assigned to different QoS flows.

When a plurality of UPFs 330 is used for a PDU session, the CN tunnel information includes tunnel information regarding the plurality of UPFs 330 terminating N3.

The N1 session management container includes a PDU session establishment accept and a QoS rule that the AMF 301 should provide to the UE 10. The PDU session establishment accept includes S-NSSAI. The Namf_Communication_N1N2MessageTransfer message includes a PDU session ID such that it can be found which access the AMF 301 uses for the UE 10.

The AMF 301 transmits an N2 PDU session request message to the (R)AN 20 (Step S520).

The N2 PDU session request message includes a PDU session ID with the UE 10 as a destination, a NAS message including the N1 session management container, and the N2 session management information received from the SMF 306.

The (R)AN 20 acquires a PDU session ID, QFI, a QoS profile (an example of a second QoS parameter), and the like from the N2 session management information included in the N2 PDU session request message. The (R)AN 20 determines a processing method on a wireless interface according to the QoS profile.

In addition, the (R)AN 20 transfers the NAS message included in the N2 PDU session request message to the UE 10 (Step S521).

As described above, the NAS message includes the PDU session ID and the N1 session management container, and the N1 session management container includes the PDU session establishment accept and the QoS rule (an example of a first QoS parameter). The UE 10 determines mapping between traffic of a user plane in an uplink and a QoS flow according to the QoS rule.

In addition, the (R)AN 20 assigns AN tunnel information (AN tunnel info) to the PDU session. The AN tunnel information includes a tunnel endpoint of each participating (R)AN node and QFIs assigned to the tunnel endpoints.

The (R)AN 20 updates the N2 session management information for notifying the SMF 306. The N2 session management information includes information such as a PDU session ID, AN tunnel information, a list of permitted or denied QFI(s), and user plane enforcement policy notification.

The (R)AN 20 returns an N2 PDU session response message including the N2 session management information to the AMF 301 (Step S522).

The AMF 301 acquires N2SM information via the N2 PDU session response received from the (R)AN 20. The AMF 301 transfers a session management context update request message (Nsmf_PDUSession_UpdateSMContext Request) of the PDU session including the session management context ID and the acquired N2 session management information to the SMF 306 (Step S523).

The SMF 306 activates an N4 session modification procedure with the UPF 330, and transmits an N4 session modification request message to the UPF 330 (Step S524).

The SMF 306 provides the UPF 330 with the AN tunnel information in addition to a transfer rule.

The UPF 330 returns an N4 session modification response message to the SMF 306 (Step S525).

Note that, when a plurality of UPFs 330 is used in the PDU session, the above session modification procedure is performed on all the UPFs 330 terminating N3.

When receiving the N4 session modification response from the UPF 330, the SMF 306 returns a session management context update response message (Nsmf_PDUSession_UpdateSMContext Response) to the AMF 301 (Step S526).

Through the above processing, a PDU session for connection with the application server 40 is established. One DNN and one S-NSSAI are associated with the PDU session. In this PDU session, processing of the learned model among pieces of processing of an application processed by the application server 40 is processed by the NWDAF 313. In this manner, the UE 10, the NWDAF 313, and the application server 40 cooperate to process an application.

When the QoS monitoring is set, the (R)AN 20 measures a delay of a UL/DL packet in the (R)AN 20 portion and provides the measured value to the UPF 330 via the reference point N3. The UPF 330 calculates a delay of the UL/DL packet at the reference point N3 or N9. Here, when the QoS flow is a GBR QoS flow or a delay-critical GBR QoS flow, the (R)AN 20 may measure the amount of data processed during a period of 5G-AN PDB as the QoS monitoring.

The UPF 330 can calculate a delay of the UL/DL packet in 5GS using the measurement result of the delay of the UL/DL packet in the (R)AN 20 portion and the measurement result of the delay of the UL/DL packet at the reference point N3 or N9.

Furthermore, the UPF 330 can measure a jitter as a change in the measurement result of the delay of the UL/DL packet, that is, a difference between the measurement results of the delay of the UL/DL packet measured at two different timings.

The UPF 330 can report, to the AF 308 or the SMF 306, a QoS monitoring result including the measurement results of the delay of the UL/DL packet and the jitter in 5GS for each QoS flow via the NEF 302.

Furthermore, the AF 308 may set monitoring in the processing time of the learned AI/ML model in the NWDAF 313 in addition to the QoS monitoring via the AF request. For example, the NWDAF 313 reports, to the AF 308, a measurement result of time required for one trial for one data set input to an input layer of the learned AI/ML model or an average time required for one trial with a preset number of trials.

The AF 308 can grasp transmission delays related to data input to an input layer of the learned AI/ML model and data of an output layer on the basis of a measurement result of the QoS monitoring for each QoS flow. Furthermore, by considering a measurement result of the processing time of the learned AI/ML model, the AF 308 can grasp a processing time in the application including the processing time in the AI/ML model. Therefore, the AF 308 can grasp time required for processing in the application including the transmission delay.

### <<11. Session management method in second case>>

In a session management method in a second case, an edge application server 41 is used.

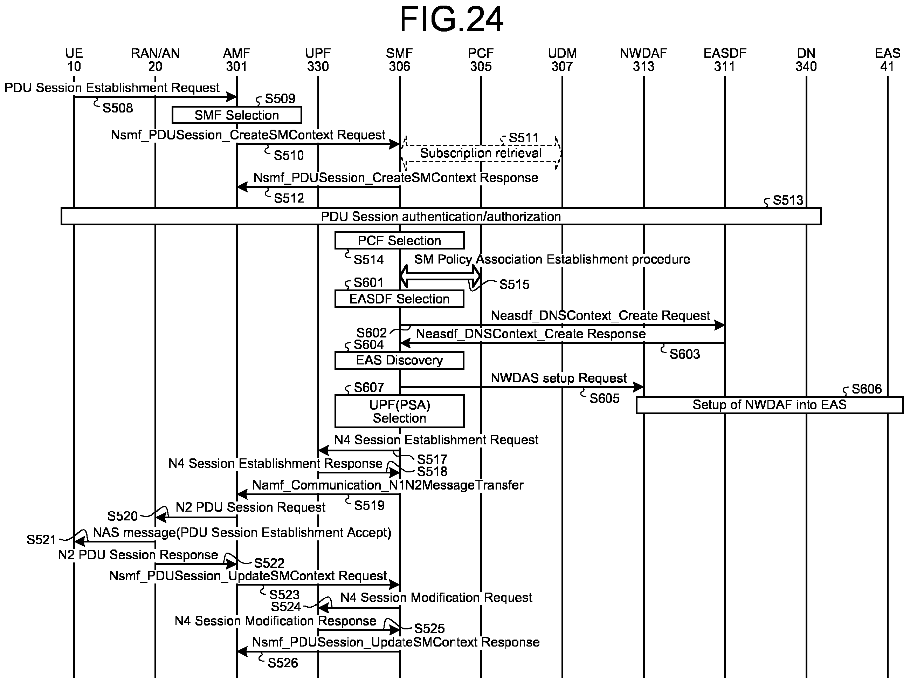

FIG. 24 is a sequence diagram illustrating another example of the PDU session establishment processing according to the embodiment of the present disclosure.

Since a procedure from Step S501 to Step S507 is the same as that in FIG. 23, illustration and description thereof are omitted here. Note that the procedure from Step S501 to Step S507 is a procedure for the AF 308 to set a learned model used by an application in the NWDAF 313 via the NEF 302. Note that, in Step S505, the PCF 305 creates a policy/rule necessary for setting the NWDAF 313 that processes the learned model used by the application according to the AF request in the edge application server 41.

In addition, since the procedure from Step S508 to Step S515 illustrated in FIG. 24 is the same as that in FIG. 23, description thereof is omitted here.

As illustrated in FIG. 24, the SMF 306 determines to set, in the edge application server 41, the NWDAF 313 that processes one or more learned AI/ML models used by the application on the basis of the PCC rule acquired in Step S515. A function of the NWDAF 313 is set in the edge application server 41, for example, when a network data analysis function is specified. After the determination, the SMF 306 executes EASDF selection (Step S601).

The SMF 306 transmits a DNS context create request (Neasdf_DNSContext_Create Request) message to the selected EASDF 311 (Step S602).

The EASDF 311 holds an IP address of the UE 10, SUPI, Subscription concealed identifier (SUCI), or the like included in the message, and creates a DNS context.

Then, the EASDF 311 returns a response message (Neasdf_DNSContext_Create Response) to the DNS context creation request message (Step S603).

After this processing, the SMF 306 adds an IP address of the EASDF 311 as a DNS server or a resolver to the PDU session establishment accept message to be transmitted to the UE 10.

The SMF 306 activates an EAS discovery procedure (Step S604).

After the activation, the SMF 306 transmits a DNS query including the IP address of the UE 10 to the EASDF 311. The EASDF 311 selects an edge application server 41 close to the UE 10 on the basis of the IP address of the UE 10.

Here, the selection of the edge application server 41 may include processing of selecting a DN 340 to be connected to the edge application server 41 and setting the DNN included in the PDU session establishment request in the DN 340.

The EASDF 311 transmits a DNS response including an IP address of the edge application server 41 selected as a response to the DNS query and/or an IP address of the DN 340.

In addition, the SMF 306 adds information regarding the location of the UE 10 to the DNS query. The EASDF 311 may select an edge application server 41 close to the UE 10 on the basis of the information regarding the location of the UE 10.

Here, the information regarding the location of the UE 10 can be acquired from the UE 10 or the LMF 312 using, for example, the method described in the location information management function of chapter 5.

Furthermore, the EASDF 311 may select the edge application server 41 on the basis of a load state of the edge application server 41 in addition to the information regarding the location of the UE 10.

For example, the EASDF 311 selects an edge application server 41 with a lowest load state when there is a plurality of candidates for the edge application server 41 within a preset range for the location of the UE 10. Alternatively, the EASDF 311 selects an edge application server 41 close to the UE 10 from among a plurality of candidates for the edge application server 41 whose load state is equal to or less than a preset threshold.

In addition, the EASDF 311 may select the edge application server 41 on the basis of capability/performance of the edge application server 40. The edge application servers 41 are classified on the basis of, for example, the number of virtual central processing unit (CPU)/graphics processing unit (GPU) cores or memory capacity. The EASDF 311 selects an edge application server 41 close to the UE 10 from a plurality of candidates for the edge application server 41 included in a classification equal to or higher than capability/performance designated by the DNS context creation request or the DNS query.

The SMF 306 requests the NWDAF 313 to set a function of the NWDAF 313 that processes one or more learned AI/ML models used by the application in the edge application server 41 (Step S605).

The NWDAF 313 that has received the request from the SMF 306 executes processing of setting a function of the NWDAF 313 including the AnLF in the edge application server 41 (EAS41 in FIG. 24) (Step S606).

The SMF 306 selects a PSA UPF 330 to be a PDU session anchor on the basis of the selected DN 340 or the edge application server 41 (Step S607).

The SMF 306 transmits an N4 session establishment request message to the selected PSA UPF 330 (Step S517), and thereafter, executes the same processing as that in Steps S518 to S526 in FIG. 23.

Through the above processing, a PDU session for connection with the edge application server 41 is established in a form of a distributed anchor point illustrated in FIG. 11. Here, the edge application server 41 serves as a computing node in a PDU session. One DNN and one S-NSSAI are associated with the PDU session.

In addition, in the edge application server 41, another piece of processing of the application executed by the application server 40 is set in addition to the function of the NWDAF 313 that processes one or more learned models used by the application. In this PDU session, the UE 10, the edge application server 41, and the NWDAF 313 set in the edge application server 41 cooperate to process the application. Furthermore, the 5GC 30 may set a function of a central unit (CU) and/or a distributed unit (DU), which is a function of the (R)AN 20, in the edge application server 41.

In advanced driver-assistance systems (ADAS) or an application that assists automatic driving, it is assumed that a learned model is used for generation of information that assists control of a vehicle.

Low latency is required to acquire the information that assists control of a vehicle. Therefore, the edge application server 41 processes processing of the learned model, and furthermore, processing of generating the information that assists control of a vehicle. As a result, a delay that occurs between a vehicle on which the UE 10 is mounted and the application server 40 is reduced.

Here, in order to generate the information that assists control of a vehicle, information acquired by various sensors mounted on the vehicle can be input to the learned model. That is, one or more learned models implement sensor fusion and generate the information that assists control of a vehicle. Examples of the various sensors include the following:
· a GNSS receiver;
· an acceleration sensor;
· a gyro sensor;
· a camera (image sensor);
· a light detection and ranging (LiDAR); and
· a millimeter wave radar.

In addition, on the vehicle, an inertial measurement unit (IMU) including an acceleration sensor, a gyro sensor, a magnetic field sensor, an atmospheric pressure sensor, a temperature sensor, and the like may be further mounted. Note that generation of the information that assists control of a vehicle includes generation of a dynamic map.

The dynamic map is map information obtained by adding various types of traffic information and the like to a highly accurate three-dimensional map. The dynamic map includes the following layers:
· a layer of static information including road surface information, lane information, or the like, which is a highly accurate three-dimensional map;
· a layer of quasi-static information including schedule information of traffic regulations and road construction, and the like;
· a layer of quasi-dynamic information including accident information, congestion information, and the like; and
· a layer of dynamic information including surrounding vehicles, pedestrian information, and the like.

The (R)AN 20 can also perform communication with a vehicle on which the UE 10 is mounted, that is, vehicle to X (V2X) communication via the Uu interface. The V2X communication is a concept including vehicle to vehicle (V2V) that means communication between a vehicle and a vehicle, vehicle to infrastructure (V2I) that means communication between a vehicle and an infrastructure device installed on a road, vehicle to pedestrian (V2P) that means communication between a vehicle and a pedestrian, and vehicle to network (V2N) that means communication between a vehicle and a network such as a cloud.

The (R)AN 20 may be a road side unit (RSU) that provides V2N communication. The road side unit can support sidelink communication via the PC5 interface to provide V2I communication.

On the road side unit, for example, a camera (image sensor), a LiDAR, millimeter wave radar, or the like is mounted, and the road side unit performs driving assistance or supports automatic driving on an exclusive road or a public road. The road side unit provides, for example, location information of a vehicle on which the UE 10 is mounted, information of a traffic light, information of a dynamic map, and the like.

The 5GC 30 may set measurement related to accuracy of control of a vehicle in ADAS or an application that assists automatic driving in the UE 10 mounted on the vehicle as measurement of QoE or another application layer.

The edge application server 41 can detect deterioration in accuracy of a learned model in an application according to the measurement result of the application layer detected by the UE 10 (that is, the measurement result regarding accuracy of control of the vehicle).

In addition, the vehicle includes an unmanned aerial vehicle (UAV) represented by a drone.

Similarly, in an application that assists control of autonomous movement or operation of a robot, it is assumed that a learned model is used for generation of information that assists control of the robot.

Low latency is required to acquire the information that assists control of a robot. Therefore, the edge application server 41 processes the learned model, and furthermore, generation of the information that assists control of a robot. As a result, a delay that occurs between a robot on which the UE 10 is mounted and the application server 40 is reduced.

Here, in order to generate the information that assists control of a robot, information acquired by various sensors mounted on the robot can be input to the learned model. That is, one or more learned models implement sensor fusion and generate the information that assists control of a robot. The various sensors are, for example, various sensors such as an inertial measurement unit, a voltage sensor, a current sensor, a time of flight (ToF) sensor, and a camera (image sensor) according to applications thereof. Examples of the various sensors further include various sensors such as an infrared sensor, an ultrasonic sensor, a pressure sensor, a vibration sensor, a humidity sensor, a gas sensor, a tactile sensor, an olfactory sensor, and a taste sensor.

As the measurement of QoE or another application layer, the 5GC 30 may set, in the UE 10 mounted on a robot, measurement related to accuracy of control of a robot in the application that assists control of autonomous movement or operation of the robot.

The edge application server 41 can detect deterioration in accuracy of a learned model in an application according to the measurement result of the application layer detected by the UE 10 (that is, the measurement result regarding accuracy of control of the robot).

In addition, in an application using extended reality (XR), it is assumed that a learned model is used for generation of XR media and encoding of XR media.

In delivery of XR media, reduction of Motion-to-Photon Latency that causes virtual reality (VR) sickness is required. Therefore, the edge application server 41 processes generation of the XR media and processing of encoding the XR media. As a result, a delay occurring between a wearable device represented by a head mounted display (HMD) on which the UE 10 is mounted and the application server 40 is reduced.

Here, in the generation of XR media, tracking information and pose information (posture information) for specifying the location of a user, a viewport, and a display location of an augmented reality (AR) content to be multiplexed are used.

In order to acquire these pieces of information, information acquired by various sensors mounted on the wearable device can be input to the learned model set in the NWDAF 313. Examples of the various sensors include a GNSS receiver, an acceleration sensor, a gyro sensor, a camera (image sensor), a magnetic field sensor, an atmospheric pressure sensor, a temperature sensor, a tactile sensor, and an olfactory sensor.

Note that an application using XR includes a game. In this case, the various sensors include a game controller, a sensor (for example, a gyro sensor) mounted on the game controller, and the like.

Here, the UE 10 is mounted on the game controller. Information acquired by the game controller and a sensor mounted on the game controller is transmitted to the edge application server 41 via the UE 10 and input to the learned model set in the NWDAF 313.

In addition, the edge application server 41 that processes generation of XR media may adaptively control a format of the XR media on the basis of a result of QoS monitoring. For example, when a measurement result of a bit rate of a GBR QoS flow assigned to the XR media does not satisfy a request value of GFBR, the edge application server 41 changes the format to a format having a lower resolution than the current format.

In addition, when a measurement result of an aggregate bit rate of all non-GBR QoS flows of the PDU session that transmits the XR media does not satisfy a request value of Session-AMBR, the edge application server 41 changes the format to a format having a lower resolution than the current format.

In addition, when a measurement result of a delay of a UL/DL packet does not satisfy a request value, the edge application server 41 changes the format to a format having a lower resolution than the current format.

In addition, when a measurement result of a jitter of a UL/DL packet does not satisfy a request value, the edge application server 41 changes the format to a format having a lower resolution than the current format.

In addition, when a measurement result of the amount of data processed during a period of the 5G-AN PDB is less than the amount of data processed in the current format, the edge application server 41 changes the format to a format having a lower resolution than the current format.

Alternatively, when receiving, from the (R)AN 20 or the SMF 306, a notification indicating that a maximum data burst amount cannot be satisfied, the edge application server 41 changes the format to a format having a lower resolution than the current format.

Here, according to a request from the edge application server 41, the AF 308 transmits an AF request including a data size in units of frames in a desired format as the maximum data burst amount to the 5GC 30.

Furthermore, in order to secure synchronization between a first PDU session and a second PDU session, the AF 308 can add a synchronization request for the two PDU sessions and/or an allowable delay amount between the two PDU sessions to the AF request.

Here, the first PDU session is, for example, a session established between a first UE 10₁ mounted on a game controller and the edge application server 41. The second PDU session is, for example, a session established between a second UE 10₂ mounted on a wearable device and the edge application server 41.

Furthermore, the AF 308 may request synchronization for the two PDU sessions at a granularity of a QoS flow. When a delay exceeding the allowable delay amount occurs between the two PDU sessions, perceived quality of a game, for example, QoE deteriorates.

In addition, the first UE 10₁ and the second UE 10₂ may add information indicating association between the two PDU sessions that require synchronization to a PDU session establishment request. On the basis of the information indicating the association between the two PDU sessions, the 5GC 30 can identify a PDU session that requires synchronization and grasp a relationship thereof.

The SMF 306 detects a delay amount in the two PDU sessions on the basis of the QoS monitoring result, and performs control such that a relative delay amount between the two PDU sessions falls within the allowable delay amount.

For example, the SMF 306 instructs the PSA UPF 330 to add a first offset in time to a PDU session with low latency (for example, the first PDU session). Due to this first offset, the PSA UPF 330 can perform control such that the relative delay amount between the two PDU sessions falls within the allowable delay amount. The control of the delay amount can be independently set for an uplink and a downlink.

This first offset is implemented, for example, by buffering a packet of a PDU session with a small delay amount (for example, the first PDU session). Alternatively, the first offset is implemented, for example, by preferentially processing a packet of a PDU session with a large delay amount (for example, the second PDU session) over a packet of a PDU session with a small delay amount (for example, the first PDU session).

Alternatively, the SMF 306 may set a synchronization request for the two PDU sessions from the AF 308 and/or an allowable delay amount between the two PDU sessions in the PSA UPF 330 at the time of the N4 session establishment request.

In this case, the PSA UPF 330 can control the first offset in time on the basis of the QoS monitoring result without receiving a notification of the first offset in time from the SMF 306.

Furthermore, the AF 308 may add an allowable jitter to the AF request in addition to the allowable delay amount when requesting synchronization for the two PDU sessions.

When determining that the two PDU sessions for which synchronization is requested do not satisfy the allowable jitter on the basis of the QoS monitoring result, the SMF 306 notifies the (R)AN 20 of an instruction to set a configured grant (CG) and/or semi persistent scheduling (SPS). Here, the 5G-AN PDB may be included in this notification.

The (R)AN 20 sets CG for an uplink QoS flow and SPS for a downlink QoS flow on the basis of the 5G-AN PDB.

In addition, the first UE 10₁ may request the second UE 10₂ to establish the first PDU session via sidelink communication. At this time, the second UE 10₂ can operate the first UE 10 as a remote UE and as a UE to network relay. Here, the second UE 10 establishes the first PDU session for relay in addition to the second PDU session in which the second UE 10 itself is a termination destination.

Furthermore, in conjunction with the first UE 10₁ instructing the second UE 10₂ to operate as a UE to Network relay, the second UE 10₂ may activate PDU session update processing and execute processing of integrating the first PDU session into the second PDU session.

With this processing, the first UE 10₁ and the second UE 10₂ can transmit and receive data to and from the edge application server 41 via the second PDU session.

Here, the AF 308 requests the 5GC 30 to perform synchronization of a QoS flow in the second PDU session. The SMF 306 sets an allowable delay amount between specific QoS flows in the PSA UPF 330 using, for example, an N4 rule.

Here, an example of requesting synchronization for two PDU sessions has been described. However, when one application provides a service via two or more PDU sessions, the AF request may further include the number of PDU sessions requesting synchronization.

In addition, the game controller and the wearable device may be connected to each other by wire. The UE 10 mounted on the game controller or the wearable device establishes one PDU session with the edge application server 41.

Information acquired by the game controller and a sensor mounted on the game controller, information acquired by a sensor mounted on the wearable device, and information acquired by a display unit of the wearable device are transmitted and received via the one PDU session.

Here, the information acquired by the game controller and each sensor mounted on the game controller, the information acquired by each sensor mounted on the wearable device, and the information acquired by a display unit of the wearable device are mapped to one or more QoS flows.

The AF 308 may request synchronization for two or more QoS flows to be processed in this one PDU session. The synchronization request for two or more QoS flows is, for example, a request for controlling a relative delay between the QoS flows or a relative delay between the QoS flows and a jitter between the QoS flows within an allowable range.

Furthermore, when a plurality of users uses one application (for example, multi-play enabled game), the AF 308 can request synchronization between PDU sessions established by the users. Here, the request for synchronization between PDU sessions is, for example, a request for controlling a relative delay between the QoS flows or a relative delay between the QoS flows and a jitter between the QoS flows within an allowable range.

The 5GC 30 can establish PDU sessions with different edge application servers 41 for users depending on the locations of the users. Different PSA UPFs 330 can be assigned to the PDU sessions with different edge application servers 41.

The 5GC 30 sets, as an anchor, a first SMF 306-1 that manages one PDU session among the PDU sessions established by the users. The first SMF 306-1 instructs the second SMF 306-2 that manages another PDU session to control the above offset in time such that a relative delay amount between PDU sessions falls within an allowable delay amount. Alternatively, the first SMF 306-1 set as an anchor may establish and directly manage an N4 session with the PSA UPF 330 that processes another PDU session.

Here, the 5G system can notify the UE 10 using S-NSSAI that synchronization can be requested between two or more PDU sessions established for an application activated by the UE 10 in a registration area.

It is assumed that specific S-NSSAI corresponding to a network slice that can control synchronization between two or more PDU sessions established for an application activated by the UE 10 is included in Allowed NSSAI. In this case, the UE 10 can transmit a PDU session establishment request including this specific S-NSSAI to the AMF 301.

Furthermore, the application separates user plane data processed by the edge application server 41 into data that can be provided to a plurality of users as the same data and other data.

The 5GC 30 acquires data that can be provided to a plurality of users as the same data as multicast transmission data, and acquires other data as unicast transmission data.

Here, the 5GC 30 can assign different QoS flows to the multicast transmission data and the unicast transmission data.

When one edge application server 41 transmits user plane data of one application to a plurality of users, the 5GC 30 can instruct the edge application server 41 to perform processing necessary for separating the multicast transmission data and the unicast transmission data from each other.

For example, the learned model set in the NWDAF 313 of the edge application server 41 determines separation between data that can provide user plane data to a plurality of users as the same data and other data.

In addition, when the number of users connected to one edge application server 41 exceeds a preset number, the 5GC 30 can instruct the edge application server 41 to perform processing necessary for separating the multicast transmission data and the unicast transmission data from each other.

A multicast/broadcast service (MBS) QoS flow is assigned to the multicast transmission data. For example, the same data is transmitted as the multicast transmission data to a plurality of users using a multi-play enabled game. On the other hand, different pieces of data are transmitted as the unicast transmission data to a plurality of users using a multi-play enabled game, respectively.

The 5GC 30 acquires one copy of the multicast transmission data and transmits the one copy of the multicast transmission data to the (R)AN 20 via a shared transport using a 5GC shared MBS traffic delivery method.

Alternatively, the 5GC 30 acquires one copy of the multicast transmission data. The 5GC 30 transmits one copy of the multicast transmission data via the first PDU session with the first UE 10₁ using a 5GC individual MBS traffic delivery method. The 5GC 30 transmits another copy of the multicast transmission data via the second PDU session with the second UE 10₂ using a 5GC individual MBS traffic delivery method.

For example, when the (R)AN 20 supports the MBS, the 5GC 30 uses the 5GC shared MBS traffic delivery method. When the (R)AN 20 does not support the MBS, the 5GC 30 uses the 5GC individual MBS traffic delivery method.

Note that it is needless to say that the method for separating user plane data into the multicast transmission data and the unicast transmission data and transmitting the separated data described here can be applied to an application other than the multi-play enabled game.

For example, this method is applied to transmission of a dynamic map to a plurality of vehicles in ADAS or an application that assists automatic driving. In this case, the 5GC 30 can transmit information of a layer of static information, or a layer of static information and a layer of quasi-static information as the multicast transmission data, and can transmit information of other layers as the unicast transmission data.

In addition, when a plurality of users uses one application (for example, a multi-play enabled game) via 5G systems of different PLMNs, the AF 308 can acquire a QoS monitoring result for each PLMN.

The AF 308 determines a second offset in time regarding a packet delay budget for each PLMN on the basis of the acquired QoS monitoring result for each PLMN so as to be able to secure synchronization between PDU sessions across the PLMNs. The AF 308 provides, via the AF request, the second offset in time regarding a packet delay budget of a corresponding PLMN to the 5GC 30 of each PLMN.

The SMF 306 of each PLMN sets, for example, packet processing according to the second offset in time acquired by using the N4 rule in the PSA UPF 330. This packet processing is implemented, for example, by buffering or preferentially processing a packet of a designated PDU session.

The packet priority processing is implemented by changing 5QI, ARP, a resource type characterizing the 5QI, a priority, a packet delay budget, and the like.

For example, the packet priority processing is implemented by changing pre-emption capability and pre-emption vulnerability of the ARP. Specifically, the packet priority processing is implemented by changing the pre-emption capability from "disabled" to "enabled" and/or changing the pre-emption vulnerability from "enabled" to "disabled".

Alternatively, the packet priority processing is implemented by changing a non-GBR QoS flow of the resource type to a GBR QoS flow, or changing the level of priority from a low priority level to a high priority level. Alternatively, the packet priority processing is implemented by changing the packet delay budget to a short time.

Here, the PLMN can broadly include a service provider that provides a 5G service in a form of a stand-alone non-public network (SNPN) represented by a local 5G.

In addition, on the wearable device, for example, a personal area network (PAN) device for acquiring information detected by a sensor mounted on a game controller is mounted. The UE 10 mounted on the wearable device may establish one PDU session with the edge application server 41 using the PAN device as one of sensors mounted on the wearable device.

Here, the PAN device is a device conforming to a wireless standard, such as infrared data association (IrDA), Bluetooth (registered trademark), ZigBee (registered trademark), or ultra wide band (UWB).

Note that, in an application other than a game, the wearable device (for example, an HMD) may be connected to a biological embedded device or the like for Internet of Medical Things (IoMT) in addition to a plurality of other wearable devices (a wristband-type device, a smartwatch, a clip-type device, a smart ring, and the like) via sidelink communication or a PAN device to acquire information on a sensor mounted on another wearable device or a biological embedded device, similarly to the game controller described above.

The plurality of other wearable devices can request establishment of each first PDU session via sidelink communication with a second UE 10 mounted on a wearable device (for example, an HMD) operating as a Layer-2 UE to Network relay.

Alternatively, the second UE 10 mounted on a wearable device (for example, an HMD) operating as a Layer-3 UE to Network relay can map a bearer via a sidelink with a plurality of other wearable devices or a PAN device to one first PDU session for a relay.

When an application other than a game is, for example, a digital twin that reflects information processed in a virtual/cyber space in a real space, or a metaverse that reflects information of a real space acquired from a plurality of users in a virtual space, processing in the virtual space and generation of information of the real space to be reflected can be processed by the edge application server 41 assigned for each user. Therefore, the AF 308 may acquire the QoS monitoring result for each edge application server 41 or each PSA UPF 330 in addition to the above-described QoS monitoring result for each PLMN. The AF 308 determines a third offset in time regarding a packet delay budget for each edge application server 41 or each PSA UPF 330 on the basis of the QoS monitoring result for each edge application server 41 or each PSA UPF 330 in a PLMN so as to be able to secure synchronization between PDU sessions that transmit information of the real space or the real space to be reflected in information of the virtual space. The AF 308 provides, via the AF request, to the 5GC 30 of each PLMN, a third offset in time regarding a packet delay budget for each edge application server 41 or each PSA UPF 330.

The SMF 306 of each PLMN sets, for example, packet processing according to the third offset in time acquired by using the N4 rule in each PSA UPF 330. This packet processing is implemented, for example, by buffering or preferentially processing a packet of a designated PDU session.

In addition, in an application of a surveillance camera/security camera system called closed-circuit television (CCTV), it is assumed that a learned model is used for analysis of moving image information acquired from a surveillance camera. In some cases, low latency is required for security purposes. Therefore, the edge application server 41 processes analysis processing of moving image information. As a result, a delay that occurs between a surveillance camera on which the UE 10 is mounted and the application server 40 is reduced.

Here, in order to analyze moving image information, information acquired by various sensors mounted on the surveillance camera can be input to the learned model. Examples of the various sensors include a camera (image sensor), an infrared sensor, an ultrasonic sensor, and a sound sensor.

Information acquired by sensors included in various pieces of hardware on which the UE 10 is mounted is input to an input layer of a learned model processed by the NWDAF 313 set in the edge application server 41. This information is input to an input layer of the learned model via a network function (for example, PSA UPF 330) that processes a user plane on a PDU session established or updated as described above.

In addition, in a UE-assisted mode, the LMF 312 may acquire a measurement result regarding GNSS such as Code Phase, Doppler, or Carrier Phase, input the measurement result to an input layer of the learned model, and calculate information regarding the location of the UE 10 as an output thereof. In this case, the LMF 312 may cause the NWDAF 313 set in the edge application server 41 to execute the processing in the learned model.

Alternatively, the LMF 312 can acquire a measurement result obtained by the (R)AN 20 measuring a signal transmitted from the UE 10 in a network based mode or a measurement result obtained by the UE 10 measuring a signal transmitted from the (R)AN 20 in a UE-assisted mode.

Here, examples of a location detection method using a signal transmitted from the UE 10 in the network based mode include UL TDOA and UL AoA. Examples of a location detection method using a signal transmitted from the (R)AN 20 in the UE-assisted mode include OTDOA, Multi-RTT, DL AoD, and DL TDOA.

For example, the LMF 312 can input the acquired measurement result to the input layer of the learned model and calculate information regarding the location of the UE 10 as an output thereof. In this case, the LMF 312 may cause the NWDAF 313 set in the edge application server 41 to execute the processing in the learned model.

Furthermore, in order to improve location accuracy, in addition to the measurement result of the RF sensing, the NWDAF 313 may input information acquired from a sensor included in a device on which the UE 10 is mounted to an input layer of the learned model and calculate information regarding the location of the UE 10.

In addition, when the PDU session is a session via a TSN bridge, the NWDAF 313 may acquire a measurement result of an inter-port delay from a TSN application function (AF) as a QoS monitoring result. The TSN AF can calculate, for example, an inter-port delay that is a difference between ingress timestamping (TSi) and egress timestamping (TSe) generated by a network-side TSN translator (NW-TT) or a device-side TSN translator (DS-TT) which is a port of the TSN bridge from the TSi and the TSe.

In addition, when the resource type is a GBR QoS flow or a delay-critical GBR QoS flow, the SMF 306 may instruct the (R)AN 20 to set configured grant (CG) and/or semi persistent scheduling (SPS). The (R)AN 20 sets CG for an uplink QoS flow and SPS for a downlink QoS flow on the basis of the 5G-AN PDB.

### <<12. Session management method in third case>>

In a session management method in a third case, the edge application server 41 is used as in the second case.

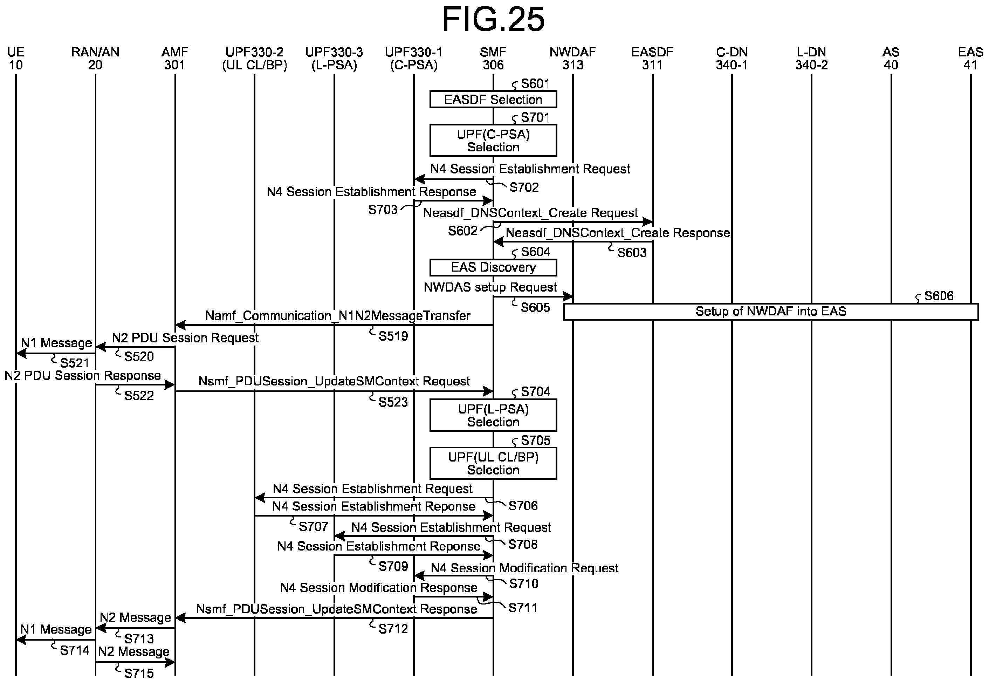

FIG. 25 is a sequence diagram illustrating another example of the PDU session establishment processing according to the embodiment of the present disclosure.

Since a procedure from Step S501 to Step S507 is the same as that in FIG. 23, description thereof is omitted here. Note that the procedure from Step S501 to Step S597 is a procedure for the AF 308 to set a learned model used by an application in the NWDAF 313 via the NEF 302.

Furthermore, since a procedure from Step S508 to Step S515 in the PDU session establishment processing is the same as that in FIG. 24, description thereof is omitted here.

As illustrated in FIG. 25, the SMF 306 determines to set, in the edge application server 41, the NWDAF 313 that processes one or more learned AI/ML models used by the application on the basis of the PCC rule acquired in Step S515. After the determination, the SMF 306 executes EASDF selection (Step S601).

The SMF 306 further executes UPF selection according to a preset rule or the acquired PCC rule. The SMF 306 selects one or more UPF (C-PSA)s 330-1 having user plane access with a central (C)-DN 340-1 (Step S701).

The SMF 306 transmits an N4 session establishment request message to the selected UPF (C-PSA) 330-1 (Step S702).

Through this N4 session establishment request message, an N4 rule for controlling uplink and downlink traffic in the UPF (C-PSA) 330-1 is set.

When receiving the N4 session establishment request message, the UPF (C-PSA) 330-1 sets the N4 rule and returns an N4 session establishment response message to the SMF 306 (Step S703).

Note that, when a plurality of UPF (C-PSA)s 330-1 is selected for the PDU session in the above Step S701, the N4 session establishment processing is activated for each UPF (C-PSA) 330-1.

The SMF 306 transmits a DNS context create request (Neasdf_DNSContext_Create Request) message to the selected EASDF 311 (Step S602).

The EASDF 311 holds an IP address, SUPI, SUCI, or the like of the UE 10 included in the message, and creates a DNS context. Then, the EASDF 311 returns a response message (Neasdf_DNSContext_Create Response) to the DNS context creation request message (Step S603).

After this processing, the SMF 306 adds an IP address of the EASDF 311 as a DNS server or a resolver to the PDU session establishment accept message to be transmitted to the UE 10.

The SMF 306 activates an EAS discovery procedure (Step S604).

The EASDF 311 transmits a DNS query including the IP address of the UE 10 to the EASDF 311, and selects an edge application server 41 close to the UE 10 on the basis of the IP address of the UE 10.

Here, the selection of the edge application server 41 may include processing of selecting a local (L)-DN 340-2 connected to the edge application server 41. In addition, a function of the L-DN 340-2 may be implemented as a logically different function in the physically same device as the edge application server 41.

The EASDF 311 transmits a DNS response including an IP address of the edge application server 41 selected as a response to the DNS query and/or an IP address of the L-DN 340-2.

In addition, the SMF 306 may add information regarding the location of the UE 10 to the DNS query. The EASDF 311 may select an edge application server 41 close to the UE 10 and/or the L-DN 340-2 on the basis of the information regarding the location of the UE 10.

Here, the information regarding the location of the UE 10 can be acquired from the UE 10 or the LMF 312 using, for example, the method described in the location information management function of chapter 5.

Furthermore, the EASDF 311 may select the edge application server 41 and/or the L-DN 340-2 on the basis of a load state of the edge application server 41 in addition to the information regarding the location of the UE 10.

For example, the EASDF 311 selects an edge application server 41 with a lowest load state when there is a plurality of candidates for the edge application server 41 within a preset range for the location of the UE 10. Alternatively, the EASDF 311 selects an edge application server 41 close to the UE 10 from among a plurality of candidates for the edge application server 41 whose load state is equal to or less than a preset threshold.

The SMF 306 requests the NWDAF 313 to set a function of the NWDAF 313 that processes one or more learned AI/ML models used by the application in the edge application server 41 (Step S605).

The NWDAF 313 that has received the request from the SMF 306 executes the processing of setting the function of the NWDAF 313 including the AnLF in the edge application server 41 (Step S606).

The SMF 306 transmits a Namf_Communication_N1N2MessageTransfer message including the N2 PDU session request message to the AMF 301 (Step S519). Since a procedure from Step S520 to Step S523 is the same as that in FIG. 23, description thereof is omitted here.

The SMF 306 selects a UPF 330 that is connected to the edge application server 41 and serves as a PDU session anchor (L-PSA) in the 5G system on the basis of the local (L)-DN 340-2 selected in Step S604, (Step S704).

Furthermore, the SMF 306 selects a UPF 330 that supports UL CL/BP (Step S705).

The SMF 306 transmits an N4 session establishment request message to a UPF (UL CL/BP) 330-2 (Step S706).

When receiving the N4 session establishment request message, the UPF (UL CL/BP) 330-2 sets the N4 rule and returns an N4 session establishment response message to the SMF 306 (Step S707).

The SMF 306 transmits the N4 session establishment request message to a UPF (L-PSA) 330-3 (Step S708).

When receiving the N4 session establishment request message, the UPF (L-PSA) 330-3 sets the N4 rule and returns an N4 session establishment response message to the SMF 306 (Step S709).

Here, the N4 rule for the UPF (L-PSA) 330-3 includes an instruction to impart the same DNN as the C-DN 340-1 to the L-DN 340-2 to which the UPF (L-PSA) 330-3 is connected. According to the instruction from the SMF 306, the UPF (L-PSA) 330-3 sets the same DNN as the C-DN 340-1 in the L-DN 340-2.

The SMF 306 transmits an N4 session modification request message to a UPF (C-PSA) 330-1 (Step S710).

The UPF (C-PSA) 330-1 performs insertion of the UPF (UL CL/BP) 330-2 and resetting of the updated N4 rule. The N4 rule is updated in association with addition of a path to be locally broken out by the UPF (UL CL/BP) 330-2 and connected with the UPF (L-PSA) 330-3. An N4 session modification response message is returned to the SMF 306 (Step S711).

The SMF 306 returns a PDU session management context update response (Nsmf_PDUSession_Update SMContext Response) message to the AMF 301 (Step S712).

Here, the PDU session management context update response message includes an N2 message including N2 session management information, CN tunnel information (CN tunnel Info), S-NSSAI, and an N1 session management container. Note that the N2 session management information is updated with the insertion of the UPF (UL CL/BP) 330-2 and the addition of a path to be locally broken out by the UPF (UL CL/BP) 330-2.

The N1 session management container includes a PDU session establishment accept and a QoS rule that the AMF 301 should provide to the UE 10. The PDU session establishment accept includes IP addresses of S-NSSAI and EASDF 311-2.

The AMF 301 transmits the N2 message included in the PDU session management context update response message to the (R)AN 20 (Step S713).

The (R)AN 20 transmits the PDU session establishment accept and the QoS rule included in the N2 message to the UE 10 using an N1 message (Step S714), and returns a response to the N2 message (Step S715).

Through the above processing, a PDU session for connecting the application server 40 and the edge application server 41 to the UE 10 is established in a form of session breakout illustrated in FIG. 10. One DNN and one S-NSSAI are associated with the PDU session.

In addition, in the edge application server 41, a function of the NWDAF 313 that processes one or more learned models used by the application is set. Another piece of processing of this application is set in the application server 40.

For example, information acquired by sensors included in various pieces of hardware on which the UE 10 is mounted is input to an input layer of a learned model processed by the NWDAF 313 set in the edge application server 41. This information is input to the input layer via a network function (for example, UPF (L-PSA) 330-3) that processes a user plane on a PDU session established or updated as described above.

In this PDU session, the UE 10, the NWDAF 313 set in the edge application server 41, and the application server 40 cooperate to process an application.

Furthermore, as another example of the present case, the AF 308 requests the 5G system to set one or more QoS flows for a second data transmission in addition to a first data transmission. This request to the 5G system is made via the AF request.

The first data transmission is, for example, data transmission between the UE 10 and the edge application server 41, which is caused by processing of a learned model of an application. The second data transmission is, for example, data transmission between the UE 10 and the application server 40, which is caused by processing other than the processing of the learned model.

The PCF 305 generates a policy/rule regarding the second data transmission on the basis of the AF request including setting of one or more QoS flows for the second data transmission.

The SMF 306 can find, on the basis of the PCC rule acquired in Step S515, 5QI applied to each flow of traffic of the second data transmission. Furthermore, the SMF 306 can find QoS features from the 5QI applied to each flow.

The SMF 306 determines, from the QoS features applied to traffic of the second data transmission, whether one or more pieces of processing other than the processing of the learned model are to be processed by the application server 40 or to be processed by the edge application server 41.

For example, when the resource type is a GBR QoS flow, the SMF 306 determines that one or more pieces of processing other than the processing of the learned model are to be processed by the edge application server 41. When the resource type is a non-GBR QoS flow, the SMF 306 determines that one or more pieces of processing other than the processing of the learned model are to be processed by the application server 40.

Furthermore, when the resource type is Delay-critical GBR, the SMF 306 may determine that one or more pieces of processing other than the processing of the learned model are to be processed by the edge application server 41. When the resource type is a GBR QoS flow other than the Delay-critical GBR, the SMF 306 may determine that one or more pieces of processing other than the processing of the learned model are to be processed by the application server 40. Here, a maximum data burst volume is set for the Delay-critical GBR.

In addition, the SMF 306 determines, on the basis of priority, whether processing other than the processing of the learned model is to be processed by the application server 40 or to be processed by the edge application server 41.

For example, when a priority level is 30 or less, the SMF 306 determines that processing other than the processing of the learned model is to be processed by the edge application server 41. When the priority level exceeds 30, the SMF 306 determines that processing other than the processing of the learned model is to be processed by the application server 40.

In addition, the SMF 306 determines, on the basis of a packet delay budget, whether processing other than the processing of the learned model is to be processed by the application server 40 or to be processed by the edge application server 41.

For example, when the packet delay budget is 50 ms or less, the SMF 306 determines that processing other than the processing of the learned model is to be processed by the edge application server 41. When the packet delay budget exceeds 50 ms, the SMF 306 determines that processing other than the processing of the learned model is to be processed by the application server 40.

In addition, the SMF 306 determines, on the basis of a packet allowable jitter, whether processing other than the processing of the learned AI/ML model is to be processed by the application server 40 or to be processed by the edge application server 41.

For example, when the packet allowable jitter is 10 ms or less, the SMF 306 determines that processing other than the processing of the learned AI/ML model is to be processed by the edge application server 41. When the packet allowable jitter exceeds 10 ms, the SMF 306 determines that processing other than the processing of the learned AI/ML model is to be processed by the application server 40.

In addition, the SMF 306 determines, on the basis of a set of 5QIs including one or more 5QIs, whether processing other than the processing of the learned AI/ML model is to be processed by the application server 40 or to be processed by the edge application server 41. This set of 5QIs includes 5QI assigned to a QoS flow that requires a low packet delay budget, and the set of 5QIs is set on the basis of the PCC rule.

For example, when 5QI assigned to traffic for the second data transmission is included in the set of 5QIs that has been set, the SMF 306 determines that processing other than the processing of the learned AI/ML model is to be processed by the edge application server 41. When 5QI assigned to traffic for the second data transmission is not included in the set of 5QIs that has been set, the SMF 306 determines that processing other than the processing of the learned AI/ML model is to be processed by the application server 40.

Here, the request to the 5G system via the AF request may be dynamically executed on the basis of the result of QoS monitoring for each QoS flow described above.

In addition, the AF 308 can request synchronization between two or more PDU sessions that are locally broken out and established with the edge application server 41 as in the session management method in the second case. This improves QoE in XR and a game application.

In Step S519, the Namf_Communication_N1N2MessageTransfer message transmitted from the SMF 306 to the AMF 301 includes N2 session management information. The N2 session management information includes QFI(s) and a QoS profile for traffic of the first data transmission, and QFI(s) and a QoS profile for traffic of the second data transmission.

In a PDU session according to another example, the UE 10, the edge application server 41, the NWDAF 313 set in the edge application server 41, and the application server 40 cooperate to process an application.

As another example of the present case, the SMF 306 can activate delay measurement of an E2E UL/DL packet between the UE 10 and the UPF (C-PSA) 330-1 for a QoS flow through processing of one or more learned models used by an application. This is performed on the basis of a QoS monitoring policy included in the PCC rule.

The (R)AN 20 measures a delay of a UL/DL packet in the (R)AN 20 portion and provides the measured value to the UPF (C-PSA) 330-1 via the reference point N3.

The UPF(C-PSA)330-1 calculates a delay of the UL/DL packet at the reference point N3 or N9. The UPF(C-PSA)330-1 transmits the QoS monitoring result to the SMF 306 on the basis of a predetermined condition.

Here, the predetermined condition is, for example, only once, periodically, or an event trigger. The event is, for example, a state in which the delay of E2E of the UL packet does not satisfy the first QoS parameter or the delay of E2E of the DL packet does not satisfy the second QoS parameter.

When detecting an event (the delay of E2E of the UL packet does not satisfy the first QoS parameter or the delay of E2E of the DL packet does not satisfy the second QoS parameter on the basis of the QoS monitoring result), the SMF 306 determines that the learned model is to be processed by the edge application server 41. The SMF 306 can activate processing subsequent to S604 in FIG. 25, for example, in order to update the PDU session established on the basis of the session management method in the first case illustrated in FIG. 23.

Note that the above-described QoS monitoring can be set not only for the QoS flow for processing of the learned AI/ML model but also for another QoS flow processed by the application.

In addition, FIG. 25 illustrates an example in which one edge application server 41 is locally broken out in one PDU session, but the number of edge application servers 41 to be locally broken out is not limited to one. For example, when a plurality of candidates for the edge application server 41 that satisfies a set allowable delay time is found via the AF request, the SMF 306 may establish a PDU session including a path with two or more edge application servers 41. For example, a function of the NWDAF 313 that processes a learned AI/ML model for an application can be set in one edge application server 41-1 (not illustrated), and other processing of the application can be set in another edge application server 41-2 (not illustrated).

Here, the SMF 306 sets a UPF (L-PSA) 330-3 for each edge application server 41. The SMF 306 sets a transfer destination for each QoS flow in the UPF (UL CL/BP) 330-2 such that each QoS flow processed by the application server 40, the edge application server 41-1, or the edge application server 4-2 is transferred to a correct transfer destination.

### <<13. Session management method in fourth case>>

A session management method in a fourth case includes distributed processing of an AI/ML model.

When the UE 10 has a certain level of operation capability, as illustrated in FIG. 4, an operation of a learned model of an application can be processed in a distributed manner by a client (that is, the UE 10) and a cloud (that is, the application server 40 or the edge application server 41).

The 5G system can manage processing capability of the UE 10 as UE radio capability.

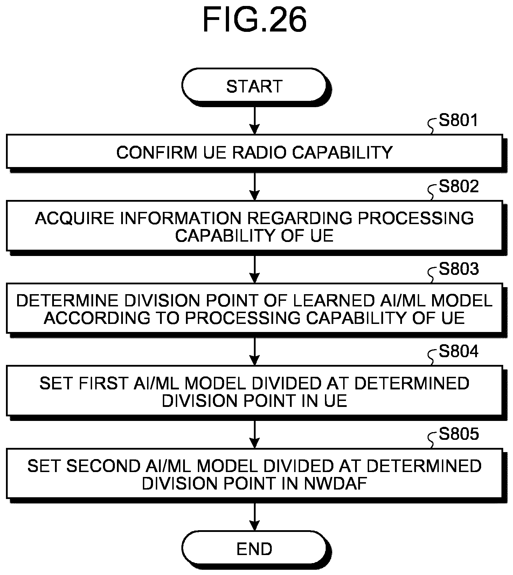

FIG. 26 is a flowchart illustrating an example of processing when an operation of a learned model of an application according to the embodiment of the present disclosure is distributed by a client and a cloud.

A network function of the 5G system, for example, the NWDAF 313 confirms the UE radio capability of the UE 10 to the UCMF 310 in response to a PDU session establishment request of the UE 10 (Step S801).

The NWDAF 313 acquires information regarding the processing capability of the UE 10 (Step S802).

Here, the information regarding the processing capability is information regarding the processing capability of an operation unit. The processing capability is, for example, the number of clocks (number of base clocks or maximum number of clocks), the number of cores, the number of threads, a memory bandwidth, or a memory capacity of an MPU, a CPU, or a GPU. Alternatively, the processing capability may be the number of clocks (number of base clocks or maximum number of clocks), the number of cores, the number of threads, a memory bandwidth, or a memory capacity of a system-on-a-chip (SoC) on which the MPU, the CPU, and the GPU are mounted. Furthermore, the processing capability may be a classification (for example, a category) set by a combination thereof.

The NWDAF 313 determines a division point of a learned AI/ML model used in an application activated by the UE 10 on the basis of the acquired information regarding the processing capability (Step S803).

Here, the NWDAF 313 determines a layer to be divided such that more hidden layers including an input layer are included in a first AI/ML model as the processing capability of the UE 10 increases. The second AI/ML model includes the remaining hidden layers including a layer of the division point and an output layer.

The NWDAF 313 instructs the SMF 306 to set the first AI/ML model in the UE 10.

For example, the SMF 306 adds information necessary for setting the first AI/ML model in the UE 10 (for example, a format of the first AI/ML model) to an N1 session management container (N1 SM container), and sets the first AI/ML model in the UE 10 according to processing of S519 to S521 in FIG. 23 (Step S804).

As illustrated in FIG. 26, when the setting of the first AI/ML model in the UE 10 is completed, the NWDAF 313 sets the second AI/ML model in AnLF (Step S805).

Through the above processing, the 5G system can perform processing of the learned model used in the application in a distributed manner by the UE 10 and the NWDAF 313 in the PDU session established for the application activated by the UE 10.

Through this processing, data that is input to the learned model and relates to the UE 10 and privacy of an individual who uses the UE 10 is not directly transmitted to a device other than the UE 10. The UE 10 transmits data of an intermediate layer processed by the first AI/ML model to a device other than the UE 10, and therefore security and personal privacy can be improved.

For example, when the application is extended reality (XR), there is tracking information for specifying the location of a user, a viewport, and a display location of an AR content to be multiplexed as information assumed to be input to the AI/ML model and processed. In addition, examples of this information include information acquired from various sensors (a GNSS receiver, an acceleration sensor, a gyro sensor, a camera (image sensor), a magnetic field sensor, an atmospheric pressure sensor, a temperature sensor, and the like) mounted on a wearable device represented by an HMD in order to acquire pose information (posture information). Not a few of these pieces of information relate to privacy.

In addition, when the application is a monitoring camera/security camera system, it is assumed that information acquired from various sensors (a camera (image sensor), an infrared sensor, an ultrasonic sensor, a sound sensor, and the like) mounted on a surveillance camera is input to an AI/ML model and processed in order to analyze moving image information. Not a few of these pieces of information relate to privacy.

In addition, the information regarding the processing capability may be information regarding transmission efficiency of a radio unit of the UE 10. Examples of the information regarding the transmission efficiency of the radio unit include the following information:
· UE category;
· maximum UL/DL data rate;
· maximum number of supported UL/DL component carriers;
· maximum number of layers of multiple input multiple output (MIMO) in UL/DL;
· maximum modulation order of UL/DL;
· maximum bandwidth in UL/DL multi-connectivity; and
· maximum bandwidth in carrier aggregation.

In addition, as another example of the present case, a network function of the 5G system, for example, the NWDAF 313 may determine a division point of the learned model used in the application activated by the UE 10. In this case, the NWDAF 313 determines the division point on the basis of, for example, information regarding communication quality between the UE 10 and the base station device 20 to which the UE 10 is connected.

Here, the information regarding the communication quality is various parameters included in a measurement report reported from the UE 10 to the (R)AN 20. Alternatively, this information may be a measurement result or the like regarding a delay amount of a UL/DL packet in the (R)AN 20 portion, which is measured by the (R)AN 20 and reported to the UPF 330 via the reference point N3.

Examples of the various parameters included in the measurement report include the following parameters:
· channel state information (CSI)-RSRP;
· CSI-RSRQ;
· CSI-signal-to-noise and interference ratio (SINR);
· synchronization signal (SS)-RSRP;
· SS-RSRQ; and
· SS-SINR.

As the communication quality between the UE 10 and the base station device 20 to which the UE 10 is connected deteriorates, the NWDAF 313 determines a layer to be divided such that more hidden layers including an input layer are included in a third AI/ML model. A fourth AI/ML model includes the remaining hidden layers including a layer of the division point and an output layer.

The SMF 306 adds information necessary for setting the third AI/ML model in the UE 10 (for example, a format of the third AI/ML model) to an N1 session management container (N1 SM container), and sets the third AI/ML model in the UE 10. This is performed, for example, according to processing of Step S519 to Step S521 in FIG. 23.

Furthermore, the communication quality between the UE 10 and the base station device 20 to which the UE 10 is connected dynamically changes. Therefore, the NWDAF 313 can dynamically control the division point of the AI/ML model according to the communication quality.

In addition, the UE 10 requests a change of the division point of the AI/ML model according to a resource use status in an MPU, a CPU, a GPU, or an SoC on which the MPU, the CPU, and the GPU are mounted.

For example, the UE 10 transmits a PDU session update request including a notification of a change of the division point of the AI/ML model.

When receiving the notification of the change of the division point of the AI/ML model via the AMF 301 or the SMF 306, the NWDAF 313 determines a different division point of the AI/ML model.

The NWDAF 313 determines a layer to be divided such that less hidden layers including an input layer are included in the third AI/ML model as a usage ratio of a calculation resource used for an operation in the UE 10 increases. The fourth AI/ML model includes the remaining hidden layers including a layer of the division point and an output layer.

Here, the UE 10 may add the resource usage ratio to the notification of the change of the division point of the AI/ML model.

The embodiment related to the network function, the session management method, the policy management method, and the system of the 5G system for the application including processing of one or more AI/ML models has been described above. It goes without saying that the present embodiment is not limited to the 5G system, and can be widely applied to next-generation and subsequent systems including Beyond 5G (B5G).

In addition, the PDU session used above is an example of a path through which user plane data is transmitted, and is not limited thereto. The technique disclosed in this specification can be applied to a broad concept in which a termination destination is set and a path through which user plane data is transmitted in any unit such as traffic, packets, and flows is formed.

### <<14. Other embodiments>>

The above-described embodiment is an example, and various modifications and applications are possible.

For example, the control device that controls the information processing device 300, the base station device 20, and the wireless communication device 10 of the above-described embodiment may be implemented by a dedicated computer system or a general-purpose computer system.

For example, a communication program for executing the above-described operation is stored in a computer-readable recording medium such as an optical disk, a semiconductor memory, a magnetic tape, or a flexible disk, and distributed. Then, for example, the program is installed in a computer, and the above-described processing is executed to configure the control device. At this time, the control device may be a device (for example, a personal computer) outside the information processing device 300, the base station device 20, and the wireless communication device 10. In addition, the control device may be a device (for example, the control unit 33, 240, or 150) inside the information processing device 300, the base station device 20, and the wireless communication device 10.

In addition, the communication program may be stored in a disk device included in a server device on a network such as the Internet such that the communication program can be, for example, downloaded to a computer. In addition, the above-described function may be implemented by cooperation of an operating system (OS) and application software. In this case, a portion other than the OS may be stored in a medium and distributed, or a portion other than the OS may be stored in a server device such that the portion other than the OS can be, for example, downloaded to a computer.

Among the processes described in the above embodiments, all or some of the processes described as being performed automatically can be performed manually, or all or some of the processes described as being performed manually can be performed automatically by a known method. In addition, the processing procedure, specific name, and information including various types of data and parameters illustrated in the above description and the drawings can be arbitrarily changed unless otherwise specified. For example, the various types of information illustrated in the drawings are not limited to the illustrated information.

In addition, each component of each device illustrated in the drawings is functionally conceptual, and does not necessarily need to be physically configured as illustrated in the drawings. That is, a specific form of distribution and integration of each device is not limited to the illustrated form, and the whole or a part thereof can be functionally or physically distributed and integrated in any unit according to various loads, usage conditions, and the like. Note that this configuration by distribution and integration may be performed dynamically.

In addition, the above-described embodiments can be appropriately combined in a region in which the processing contents do not contradict each other. In addition, the order of the steps illustrated in the sequence diagrams and the flowcharts of the above-described embodiment can be appropriately changed.

In addition, for example, the present embodiment can be performed as any configuration constituting a device or a system, for example, a processor as a system large scale integration (LSI) or the like, a module using a plurality of processors or the like, a unit using a plurality of modules or the like, a set obtained by further adding other functions to a unit, or the like (that is, a configuration of a part of the device).

Note that, in the present embodiment, the system means a set of a plurality of components (devices, modules (parts), and the like), and it does not matter whether or not all the components are in the same housing. Therefore, a plurality of devices housed in separate housings and connected to each other via a network, and one device in which a plurality of modules is housed in one housing are both systems.

In addition, for example, the present embodiment can adopt a configuration of cloud computing in which one function is shared and processed by a plurality of devices in cooperation via a network.

### <<15. Conclusion>>

Although the embodiments of the present disclosure have been described above, the technical scope of the present disclosure is not limited to the above-described embodiments as they are, and various modifications can be made without departing from the gist of the present disclosure. In addition, components of different embodiments and modifications may be appropriately combined with each other.

In addition, the effects of the embodiments described here are merely examples and are not limited, and other effects may be provided.

Note that the present technique can also have the following configurations.
(1) An information processing device that executes an application, the information processing device comprising
   a control unit that makes a request regarding processing of a learning model used in the application to a device having a network data analysis function of a mobile network via a network exposure function and/or directly.
(2) The information processing device according to (1), wherein the control unit acquires model information regarding the learning model supported by the mobile network via at least one of the network data analysis function and the network exposure function.
(3) The information processing device according to (2), wherein the control unit sets a format of at least one of the learning model to be processed by the device having the network data analysis function on a basis of the model information.
(4) The information processing device according to (3), wherein the control unit makes the request including application identification information for identifying the application and format information regarding the format of the set learning model to the device.
(5) The information processing device according to (3) or (4), in which
   the model information includes at least information regarding a type of the learning model, and
   the control unit sets the type of the learning model as the format for the application.
(6) The information processing device according to (5), in which the type includes at least one of a neural network model and a deep neural network model.
(7) The information processing device according to any one of (3) to (6), in which
   the model information includes at least information regarding an algorithm of the learning model, and
   the control unit sets the algorithm of the learning model as the format for the application.
(8) The information processing device according to (7), in which the algorithm includes at least one of a convolution neural network, a recurrent neural network, a fully connected neural network, a long short-term memory (LSTM), and an autoencoder.
(9) The information processing device according to any one of (3) to (8), in which
   the model information includes information regarding at least one of a range of the number of layers that can be set in the learning model and a range of the number of nodes of each layer, and
   the control unit sets at least one of the number of layers of the learning model and the number of nodes as the format for the application.
(10) The information processing device according to any one of (3) to (9), in which
   the model information includes information regarding a kind of the learning model, and
   the control unit sets the kind of the learning model as the format for the application.
(11) The information processing device according to (10), in which
   the information regarding the kind includes type information regarding a type of the learning model and algorithm information regarding an algorithm of the learning model,
   the type information includes information regarding at least one of a neural network model and a deep neural network model, and
   the algorithm information includes information regarding at least one of a convolution neural network, a recurrent neural network, a fully connected neural network, a long short-term memory (LSTM), and an autoencoder.
(12) The information processing device according to any one of (3) to (11), wherein
   the control unit acquires, as the model information, parameter information regarding a parameter that can be acquired from a network function of the mobile network, and
   makes the request including correspondence information in which the parameter and input data of the learning model in the format are associated with each other to the device.
(13) The information processing device according to (12), wherein
   the parameter information includes first parameter information regarding a first parameter that can be acquired from a network function of a control plane of the mobile network and second parameter information regarding a second parameter that can be acquired from a network function that processes a user plane, and
   the correspondence information includes first correspondence information in which the first parameter and the format are associated with each other, and second correspondence information in which the second parameter and the format are associated with each other.
(14) The information processing device according to any one of (1) to (13), wherein the control unit makes the request to the device for the processing of the learning model including a notification that gives an instruction on learning of the learning model.
(15) The information processing device according to (14), in which the device executes learning of the learning model according to the notification included in the request.
(16) The information processing device according to (14) or (15), in which the control unit acquires model identification information for identifying the learned learning model via at least one of the network data analysis function and the network exposure function as a response of the request to the device.
(17) The information processing device according to (16), in which the control unit designates the model identification information, and makes a second request to the device for the processing of the learning model including a relearning notification that gives an instruction on relearning of the learned learning model.
(18) The information processing device according to any one of (1) to (13), wherein
   the control unit
   acquires parameter information regarding a parameter that can be acquired from a network function of the mobile network,
   performs learning of the learning model by using the parameter as input data of the learning model on a basis of a correspondence relationship between the parameter and a format of the learning model, and
   makes the request including second format information regarding a second format of the learned learning model to the device.
(19) The information processing device according to (18), in which the second format information includes information regarding setting of a format of the learning model and a weighting factor between nodes of the learning model.
(20) The information processing device according to (18) or (19), wherein
   the control unit
   acquires model identification information for identifying the learning model via at least one of the network data analysis function and the network exposure function as a response of the request to the device, and
   makes a second request including an instruction to update the learning model specifying the model identification information to the device via the network exposure function or directly.
(21) The information processing device according to (20), in which
   the control unit
   generates a third format that updates the learning model, and
   makes the second request to the device for giving an instruction to update the learning model in the set third format.
(22) The information processing device according to (21), in which
   the control unit
   performs relearning of the learning model on the basis of quality of experience (QoE) of the application, and
   generates the third format on the basis of the learning model for which the relearning has been performed.
(23) The information processing device according to any one of (14) to (22), wherein
   the control unit makes the request including information regarding a first quality of service (QoS) parameter and information regarding a second QoS parameter to the device,
   the first QoS parameter and the second QoS parameter are parameters applied in a session for communicating at least one of input data input to the learned learning model used in the application and output data output from the learning model,
   the first QoS parameter is applied to a network function that processes a user plane of the mobile network in order to acquire a second parameter that can be acquired from the network function that processes the user plane among pieces of the input data, and
   the second QoS parameter is applied to the network function that processes the user plane in order to transmit the output data.
(24) An information processing device that establishes or updates one session for processing an application, the information processing device comprising
   a control unit that acquires, on a basis of the application, a policy applied to one or more learning models processed by a network data analysis function for the application.
(25) The information processing device according to (24), wherein the application is specified on a basis of at least one of a data network name and an application ID.
(26) The information processing device according to (24) or (25), wherein
   the policy includes:
   setting related to a correspondence between a parameter acquired from a network function of a mobile network and input data of a learning model;
   setting related to a correspondence between a second parameter acquired from a function of processing a user plane among the parameters and the input data;
   a first QoS parameter applied to the second parameter; and
   a second QoS parameter applied to output data of the learning model.
(27) The information processing device according to (26), wherein
   the control unit
   transmits the first QoS parameter and the second QoS parameter to a first network function having a first interface with a base station device in a control plane,
   transmits the first QoS parameter to the base station device via the first interface, and
   transmits, via a second interface with the base station device, the second QoS parameter to a communications device using a non-access stratum (NAS) message.
(28) The information processing device according to any one of (24) to (27), wherein
   the control unit receives a message requesting the establishment of the one session,
   the message includes a data network name and slice identification information identifying a network slice, and
   the control unit specifies a network data analysis function that processes the one or more learning models on a basis of at least one of the data network name, an application ID, and the slice identification information.
(29) The information processing device according to (28), wherein the control unit sets the specified network data analysis function in an edge application server when specifying the network data analysis function.
(30) The information processing device according to (29), in which the control unit selects the edge application server on the basis of location information regarding a location of the communication device acquired from at least one of a communication device and a location management function.
(31) The information processing device according to any one of (24) to (30), in which the control unit requests the establishment or the update of the one session including the first network slice selection assistance information when first network slice selection assistance information corresponding to a network slice in which the network data analysis function processes the one or more learning models used in the application is included in Allowed NSSAI.
(32) The information processing device according to (31), in which the control unit specifies the one or more learning models to be processed by the network data analysis function for the application when the first network slice selection assistance information is included in the request for the establishment or the update of the one session.
(33) The information processing device according to any one of (24) to (32), in which
   the control unit sets one or more QoS flows for traffic generated by second processing different from first processing among pieces of processing executed by the specified application and transmitted to and from a communication device, and
   the first processing is performed using the one or more learning models in the network data analysis function.
(34) The information processing device according to (33), in which
   the control unit
   sets the second processing corresponding to the QoS flow in an edge application server when a resource type of the QoS flow is a GBR QoS flow, and
   sets the second processing corresponding to the QoS flow in an application server when the resource type of the QoS flow is a non-GBR QoS flow.
(35) The information processing device according to (33) or (34), in which
   the control unit
   sets the second processing corresponding to the QoS flow in an edge application server when a priority level of the QoS flow is equal to or less than a set threshold, and
   sets the second processing corresponding to the QoS flow in an application server when the priority level of the QoS flow exceeds the set threshold.
(36) The information processing device according to (33) or (34), in which
   the control unit
   sets the second processing corresponding to the QoS flow in an edge application server when a packet delay budget of the QoS flow is equal to or less than a set threshold, and
   sets the second processing corresponding to the QoS flow in an application server when the packet delay budget of the QoS flow exceeds the set threshold.
(37) The information processing device according to (33) or (34), in which
   the control unit
   sets the second processing corresponding to the QoS flow in an edge application server when 5QI of the QoS flow is included in a set that has been set, and
   sets the second processing corresponding to the QoS flow in an application server when the 5QI of the QoS flow is not included in the set that has been set.
(38) The information processing device according to (29) or (30), wherein
   the control unit
   determines whether or not the first QoS parameter and the second QoS parameter are satisfied,
   sets the specified network data analysis function in the edge application server when the first QoS parameter and the second QoS parameter are not satisfied as a result of the determination,
   the first QoS parameter is applied to a second parameter acquired from a function of processing a user plane among parameters acquired from a network function of a mobile network, and
   the second QoS parameter is applied to output data of the learning model.
(39) The information processing device according to any one of (24) to (38), wherein
   the control unit
   acquires at least one of capability and communication quality of a communication device,
   determines that the network data analysis function divides the one or more learning models into a first learning model and a second learning model on a basis of at least one of the capability and the communication quality of the communication device,
   transmits first format information regarding a format of the first learning model to the communication device,
   the communication device sets the first learning model using the received first format information, and
   the network data analysis function sets the second learning model.
(40) The information processing device according to any one of (24) to (39), in which
   the control unit
   acquires, from a base station device connected to a communication device, quality information regarding communication quality between the communication device and the base station device,
   determines, on the basis of the quality information, that the network data analysis function divides the one or more learning models into a third learning model and a fourth learning model, and
   transmits third format information regarding a format of the third learning model to the communication device,
   the communication device sets the third learning model using the received third format information, and
   the network data analysis function sets the fourth learning model.
(41) An information processing device having a function of managing a policy applied to one session, the information processing device comprising
   a control unit that receives, from an application function, a request including application identification information for identifying an application and format information regarding a format of a learning model via a network exposure function or directly, and
   generates the policy on a basis of the application identification information and the format information included in the request.
(42) The information processing device according to (41), wherein the format information includes at least one of model information regarding the learning model and correspondence information regarding a correspondence between a parameter of a mobile network system input to an input layer of the learning model and input data of the learning model.
(43) The information processing device according to (42), in which the model information includes information regarding any one of the type of the learning model, the kind of algorithm, the number of layers, the number of nodes in each layer, and a weighting factor between nodes.
(44) A communication device that establishes a session that processes a user plane with an edge application server, the communication device including a control unit that
   transmits input data to be input to a learned learning model processed by a network data analysis function set in the edge application server,
   acquires a QoS rule to be applied to the input data, and
   assigns flow identification information for identifying a QoS flow to the input data on the basis of the QoS rule.
(45) The communication device according to (44), in which
   the control unit
   acquires first setting information for setting a first learning model out of the first learning model and a second learning model obtained by dividing the learning model, and
   transmits a value of a node of an output layer of the first learning model as the input data.
(46) The communication device according to (44) or (45), in which
   the learning model is identified by model identification information, and
   the flow identification information for identifying the QoS flow is assigned for each piece of the model identification information.
(47) The communication device according to (45), in which
   the first learning model is identified by first model identification information, and
   the flow identification information for identifying the QoS flow is assigned for each piece of the first model identification information.
(48) The communication device according to any one of (44) to (47), in which
   the session adds a function of uplink classifier (UL CL) or a function of branching point (BP) to a second user plane with an application server and connects the user plane with the edge application server in a form of session breakout,
   the application server executes second processing using a result of the learned learning model, and
   the control unit transmits second data used for the second processing to the application server via the function of the UL CL or the BP.
(49) The communication device according to any one of (44) to (48), in which
   the control unit
   transmits the input data via a base station device,
   acquires measurement information regarding measurement of a signal received from the base station device and report setting,
   reports a measurement result of the signal on the basis of the measurement information, and
   acquires first setting information for setting a first learning model out of the first learning model and a second learning model obtained by dividing the learning model on the basis of the measurement result.
(50) The communication device according to any one of (44) to (49), in which
   the control unit
   transmits a session update request including a request to change a division point of the learning model, and
   acquires first setting information regarding setting of a first learning model obtained by dividing the learning model as a response to the update request.
(51) The communication device according to (50), in which
   the control unit
   acquires a resource usage ratio in at least one of a central processing unit (CPU), a graphics processing unit (GPU), and a system-on-a-chip (SoC) on which the CPU and the GPU are mounted, and
   determines to transmit the session update request on the basis of the usage ratio.
(52) The communication device according to any one of (44) to (51), in which the control unit transmits a second session update request including a request for relearning of the learning model.
(53) The communication device according to (52), in which the control unit measures quality of experience (QoE) for an application using the learning model, and determines transmission of the second session update request on the basis of the measured QoE.
(54) The communication device according to any one of (44) to (53), in which
   the control unit acquires Allowed NSSAI as a response to a registration request including first network slice selection assistance information,
   the first network slice selection assistance information corresponds to a network slice in which the network data analysis function processes the learning model, and
   the control unit requests establishment of the session when the first network slice selection assistance information is included in the Allowed NSSAI.
(55) The communication device according to (54), in which the control unit stops the request for establishment of the session when the first network slice selection assistance information is not included in the Allowed NSSAI.
(56) The communication device according to any one of (44) to (55), further including
   a sensor, in which
   the control unit transmits sensor data acquired by the sensor as the input data.
(57) An information processing device including a control unit that
   establishes a plurality of sessions with a plurality of communication devices using one application, and
   sets synchronization between the plurality of sessions in a network function that manages the plurality of sessions.
(58) The information processing device according to (57), in which
   the control unit
   acquires relevant information indicating an association between the plurality of sessions, and
   specifies the session for which the synchronization is set among the plurality of sessions on the basis of the relevant information.
(59) The information processing device according to (57) or (58), in which
   the network function sets an allowable delay amount related to the synchronization in a second network function that processes user plane data of the plurality of sessions.
(60) The information processing device according to (59), in which the allowable delay amount is independently set for an uplink and a downlink.
(61) The information processing device according to any one of (57) to (60), in which
   the network function provides first offset information regarding a first offset for the synchronization to a second network function that processes user plane data of the plurality of sessions on the basis of a QoS monitoring result of each of the plurality of sessions, and
   the second network function controls buffering on the basis of the first offset and an allowable delay amount related to the synchronization for one of the plurality of sessions.
(62) The information processing device according to any one of (57) to (60), in which
   the network function provides first offset information regarding a first offset for the synchronization to a second network function that processes user plane data of the plurality of sessions on the basis of a QoS monitoring result of each of the plurality of sessions, and
   the second network function controls preferential packet processing on the basis of the first offset and an allowable delay amount related to the synchronization for one of the plurality of sessions.
(63) The information processing device according to any one of (57) to (60), in which
   a second network function that processes user plane data of the plurality of sessions
   detects a first offset for the synchronization on the basis of a QoS monitoring result of each of the plurality of sessions, and
   controls buffering on the basis of the first offset and an allowable delay amount related to the synchronization for one of the plurality of sessions.
(64) The information processing device according to any one of (57) to (60), in which
   a second network function that processes user plane data of the plurality of sessions
   detects a first offset for the synchronization on the basis of a QoS monitoring result of each of the plurality of sessions, and
   controls preferential packet processing on the basis of the first offset and an allowable delay amount related to the synchronization for one of the plurality of sessions.
(65) The information processing device according to any one of (57) to (64), in which the network function acquires a request for the synchronization between the plurality of sessions established for the application via an application function (AF) request.
(66) The information processing device according to (65), in which the network function acquires an allowable delay amount related to the synchronization via the AF request.
(67) The information processing device according to (65) or (66), in which the network function acquires designation information for designating a QoS flow to be synchronized via the AF request.
(68) The information processing device according to any one of (65) to (67), in which
   a control unit generates a policy for managing the session on the basis of the AF request, and
   the network function acquires the created policy and controls the session according to the acquired policy.
(69) The information processing device according to any one of (57) to (68), in which
   the application is processed by an edge application server, and
   the control unit establishes the plurality of sessions with the edge application server in a form of a distributed anchor point.
(70) The information processing device according to any one of (57) to (68), in which
   the application is processed by an edge application server, and
   the control unit establishes the plurality of sessions with the edge application server in a form of session breakout.
(71) The information processing device according to any one of (57) to (70), in which
   the plurality of communication devices includes a control device on which a sensor is mounted and a display device, and
   the application
   receives sensor information detected by the sensor via a first session among the plurality of sessions,
   generates moving image data according to the sensor information, and
   transmits the moving image data to the display device via a second session among the plurality of sessions.
(72) The information processing device according to (71), in which the control unit requests the display device to establish the first session for a relay to the control device via sidelink communication with the display device.
(73) The information processing device according to (72), in which the control unit notifies the display device to operate as a UE to Network relay.
(74) The information processing device according to any one of (71) to (73), in which
   the control unit
   activates session update processing and integrates the first session and the second session.
(75) The information processing device according to (57), in which
   a first session included in the plurality of sessions is a session between a first communication device included in the plurality of communication devices and a first edge application server,
   a second session included in the plurality of sessions is a session between a second communication device included in the plurality of communication devices and a second edge application server,
   a control unit selects a third network function as an anchor from a first network function that manages the first session and a second network function that manages the second session, and
   the third network function controls synchronization between the first session and the second session.
(76) The information processing device according to (75), in which
   the third network function
   detects a first offset for the synchronization on the basis of a QoS monitoring result of each of the first session and the second session, and
   provides first offset information regarding the first offset to a fourth network function that processes user plane data of the first session.
(77) The information processing device according to (76), in which the fourth network function controls buffering for the first session on the basis of the first offset information.
(78) The information processing device according to (76), in which the fourth network function controls preferential packet processing for the first session on the basis of the first offset information.
(79) The information processing device according to any one of (75) to (78), in which
   a third session included in the plurality of sessions is a session in a first public land mobile network (PLMN) between the first communication device included in the plurality of communication devices and the first edge application server,
   a fourth session included in the plurality of sessions is a session between the second communication device included in the plurality of communication devices and the second edge application server, and
   the network function of the first PLMN acquires, via an AF request, synchronization information regarding synchronization between the third session and the fourth session, and
   sets, on the basis of the synchronization information, a second offset in a fourth network function of the first PLMN, the fourth network function processing user plane data of the first session.
(80) The information processing device according to (79), in which the fourth session is a session of the first PLMN.
(81) The information processing device according to (79), in which the fourth session is a session of a second PLMN.
(82) The information processing device according to any one of (79) to (81), in which the synchronization information is set on the basis of a first QoS monitoring result regarding the third session and a second QoS monitoring result regarding the fourth session.
(83) The information processing device according to any one of (79) to (82), in which the fourth network function controls buffering for the third session on the basis of second offset information regarding the second offset.
(84) The information processing device according to any one of (79) to (82), in which the fourth network function controls preferential packet processing for the third session on the basis of second offset information regarding the second offset.
(85) The information processing device according to (57), in which
   a first session included in the plurality of sessions is a session between a first communication device included in the plurality of communication devices and an edge application server,
   a second session included in the plurality of sessions is a session between a second communication device included in the plurality of communication devices and the edge application server, and
   the control unit
   separates user plane data processed by the edge application server to data for multicast transmission and data for unicast transmission,
   acquires multicast data for the same multicast transmission, and transmits the multicast data to the first communication device and the second communication device, and
   acquires different pieces of unicast data for the unicast transmission, and transmits the unicast data via the first session and the second session.
(86) The information processing device according to (85), in which the control unit transmits one copy of the multicast data via a shared transport.
(87) The information processing device according to (85), in which
   the control unit
   transmits one copy of the multicast data via the first session, and
   transmits another copy of the multicast data via the second session.
(88) The information processing device according to any one of (85) to (87), in which the control unit transmits one copy of the multicast data via a shared transport when a base station device to which the first communication device and the second communication device are connected supports a multicast/broadcast service (MBS).
(89) The information processing device according to any one of (85) to (88), in which the control unit transmits one copy of the multicast data via the first session, and transmits another copy of the multicast data via the second session when a base station device to which the first communication device and the second communication device are connected does not support an MBS.
(90) The information processing device according to any one of (85) to (89), in which the control unit separates the multicast data and the unicast data from each other when the number of the communication devices connected to the edge application server exceeds a preset number.
(91) The information processing device according to any one of (85) to (90), in which the control unit assigns an MBS QoS flow to the multicast data.

### Reference Signs List

10 WIRELESS COMMUNICATION DEVICE
20 BASE STATION DEVICE
31, 110, 210 COMMUNICATION UNIT
32, 120, 220 STORAGE UNIT
33, 150, 240 CONTROL UNIT
40 APPLICATION SERVER
41 EDGE APPLICATION SERVER
111, 211 RECEPTION PROCESSING UNIT
112, 212 TRANSMISSION PROCESSING UNIT
113, 213, 214 ANTENNA
130, 230 NETWORK COMMUNICATION UNIT
140 INPUT/OUTPUT UNIT
300 INFORMATION PROCESSING DEVICE

## Claims

1. An information processing device that executes an application, the information processing device comprising
a control unit that makes a request regarding processing of a learning model used in the application to a device having a network data analysis function of a mobile network via a network exposure function and/or directly.

2. The information processing device according to claim 1, wherein the control unit acquires model information regarding the learning model supported by the mobile network via at least one of the network data analysis function and the network exposure function.

3. The information processing device according to claim 2, wherein the control unit sets a format of at least one of the learning model to be processed by the device having the network data analysis function on a basis of the model information.

4. The information processing device according to claim 3, wherein the control unit makes the request including application identification information for identifying the application and format information regarding the format of the set learning model to the device.

5. The information processing device according to claim 3, wherein
the control unit acquires, as the model information, parameter information regarding a parameter that can be acquired from a network function of the mobile network, and
makes the request including correspondence information in which the parameter and input data of the learning model in the format are associated with each other to the device.

6. The information processing device according to claim 5, wherein
the parameter information includes first parameter information regarding a first parameter that can be acquired from a network function of a control plane of the mobile network and second parameter information regarding a second parameter that can be acquired from a network function that processes a user plane, and
the correspondence information includes first correspondence information in which the first parameter and the format are associated with each other, and second correspondence information in which the second parameter and the format are associated with each other.

7. The information processing device according to claim 1, wherein the control unit makes the request to the device for the processing of the learning model including a notification that gives an instruction on learning of the learning model.

8. The information processing device according to claim 1, wherein
the control unit
acquires parameter information regarding a parameter that can be acquired from a network function of the mobile network,
performs learning of the learning model by using the parameter as input data of the learning model on a basis of a correspondence relationship between the parameter and a format of the learning model, and
makes the request including second format information regarding a second format of the learned learning model to the device.

9. The information processing device according to claim 8, wherein
the control unit
acquires model identification information for identifying the learning model via at least one of the network data analysis function and the network exposure function as a response of the request to the device, and
makes a second request including an instruction to update the learning model specifying the model identification information to the device via the network exposure function or directly.

10. The information processing device according to claim 7, wherein
the control unit makes the request including information regarding a first quality of service (QoS) parameter and information regarding a second QoS parameter to the device,
the first QoS parameter and the second QoS parameter are parameters applied in a session for communicating at least one of input data input to the learned learning model used in the application and output data output from the learning model,
the first QoS parameter is applied to a network function that processes a user plane of the mobile network in order to acquire a second parameter that can be acquired from the network function that processes the user plane among pieces of the input data, and
the second QoS parameter is applied to the network function that processes the user plane in order to transmit the output data.

11. An information processing device that establishes or updates one session for processing an application, the information processing device comprising
a control unit that acquires, on a basis of the application, a policy applied to one or more learning models processed by a network data analysis function for the application.

12. The information processing device according to claim 11, wherein the application is specified on a basis of at least one of a data network name and an application ID.

13. The information processing device according to claim 11, wherein
the policy includes:
setting related to a correspondence between a parameter acquired from a network function of a mobile network and input data of a learning model;
setting related to a correspondence between a second parameter acquired from a function of processing a user plane among the parameters and the input data;
a first QoS parameter applied to the second parameter; and
a second QoS parameter applied to output data of the learning model.

14. The information processing device according to claim 13, wherein
the control unit
transmits the first QoS parameter and the second QoS parameter to a first network function having a first interface with a base station device in a control plane,
transmits the first QoS parameter to the base station device via the first interface, and
transmits, via a second interface with the base station device, the second QoS parameter to a communications device using a non-access stratum (NAS) message.

15. The information processing device according to claim 11, wherein
the control unit receives a message requesting the establishment of the one session,
the message includes a data network name and slice identification information identifying a network slice, and
the control unit specifies a network data analysis function that processes the one or more learning models on a basis of at least one of the data network name, an application ID, and the slice identification information.

16. The information processing device according to claim 15, wherein the control unit sets the specified network data analysis function in an edge application server when specifying the network data analysis function.

17. The information processing device according to claim 16, wherein
the control unit
determines whether or not the first QoS parameter and the second QoS parameter are satisfied,
sets the specified network data analysis function in the edge application server when the first QoS parameter and the second QoS parameter are not satisfied as a result of the determination,
the first QoS parameter is applied to a second parameter acquired from a function of processing a user plane among parameters acquired from a network function of a mobile network, and
the second QoS parameter is applied to output data of the learning model.

18. The information processing device according to claim 11, wherein
the control unit
acquires at least one of capability and communication quality of a communication device,
determines that the network data analysis function divides the one or more learning models into a first learning model and a second learning model on a basis of at least one of the capability and the communication quality of the communication device,
transmits first format information regarding a format of the first learning model to the communication device,
the communication device sets the first learning model using the received first format information,
the network data analysis function sets the second learning model, and
the communication quality is communication quality between the communication device and a base station device, notification of which is provided by the base station device connected to the communication device.

19. An information processing device having a function of managing a policy applied to one session, the information processing device comprising
a control unit that receives, from an application function, a request including application identification information for identifying an application and format information regarding a format of a learning model via a network exposure function or directly, and
generates the policy on a basis of the application identification information and the format information included in the request.

20. The information processing device according to claim 19, wherein the format information includes at least one of model information regarding the learning model and correspondence information regarding a correspondence between a parameter of a mobile network system input to an input layer of the learning model and input data of the learning model.
